# EUROPEAN PATENT APPLICATION

(11) **EP 1 762 959 A2**
(43) Date of publication of application: **14.03.2007**
(21) Application number: 05257927.3
(22) Date of filing: 21.12.2005
(51) Int. Cl.: G06K 7/00, G07G 1/00

(54) **Apparatus, system and method for communicating product information**

(30) Priority: 13.09.2005 JP 2005265965
(71) Applicant: Fujitsu Ltd., Kawasaki-shi, Kanagawa 211-8588 (JP); Fujitsu Frontech Limited, Inagi-shi, Tokyo 206-8555 (JP)
(72) Inventor: Kawamata, Hiroshi, Fujitsu Frontech Limited, Inagi-shi Tokyo 206-8555 (JP)
(74) Representative: Hitching, Peter Matthew

(57) **Abstract**

A shopping cart communication apparatus (10), installed in a shopping cart that accommodate products attached with RFID tags (40), functions as a reader/writer to read information from the RFID tags, and also functions as an RFID tag (100) to transmit the read information to display shelf communication apparatuses (20₁ to 20ₙ). The display shelf communication apparatuses function as reader/writers to receive the information transmitted from the shopping cart communication apparatus, and also function as RFID tags (200₁ to 200ₙ) to transmit product information corresponding to the received information. The shopping cart communication apparatus as a reader/writer receives the product information from the display shelf communication apparatuses.

## Description

### BACKGROUND OF THE INVENTION

### 1. Field of the Invention

The present invention relates to an apparatus, a system, and a method for communicating information, that can be introduced easily and that can effectively suppress the occurrence of a communication failure.

### 2. Description of the Related Art

Conventionally, a PLU (Price Look Up) system is used. According to this system, an RFID tag that stores identification information for identifying a product is attached to each product. A reader/writer installed in a shopping cart reads the identification information of a product. A radio device, also installed in the shopping cart, transmits the identification information of the product to a server device. The radio device receives price information of the product from the server device.

According to the PLU system, many radio devices are installed on the ceiling of a shop. These radio devices exchange identification information and price information of various products with the radio device installed in the shopping cart.

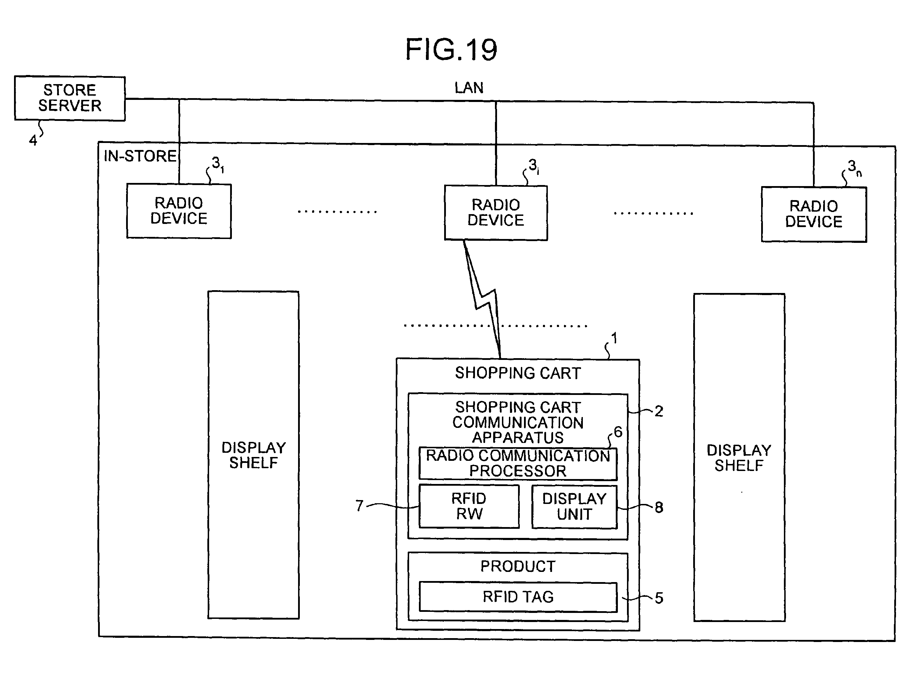

Fig. 19 is a configuration diagram of a conventional PLU system. As shown in Fig. 19, the conventional PLU system includes a shopping cart communication apparatus 2 installed in a shopping cart 1, radio devices 3₁ to 3ₙ that carry out radio communication with the shopping cart communication apparatus 2, and a shop server 4.

The shopping cart communication apparatus 2 carries out a PLU process. That is, the shopping cart communication apparatus 2 communicates with an RFID tag 5 attached to a product, which is picked from a display shelf and put into the shopping cart. The shopping cart communication apparatus 2 reads identification information of the product stored in the RFID tag 5, obtains price information of the product corresponding to the identification information, and outputs the price information.

Specifically, the shopping cart communication apparatus 2 includes a radio communication processor 6 that carries out radio communication with the radio devices 3₁ to 3ₙ, an RFID RW (Reader/Writer) 7 that reads identification information of a product stored in the RFID tag 5, and a display unit 8 that is a liquid crystal display that displays information.

The RFID RW 7 of the shopping cart communication apparatus 2 reads identification information of a product from the RFID tag 5. The radio communication processor 6 transmits this information to the radio devices 3₁ to 3ₙ by radio communication.

The radio devices 3₁ to 3ₙ transmit the identification information of a product to the store server 4 via a LAN (Local Area Network). The store server 4 searches a database for price information corresponding to the received identification information of the product, and transmits the price information to the radio devices 3₁ to 3ₙ.

Thereafter, the radio devices 3₁ to 3ₙ transmit the price information to the radio communication processor 6 of the shopping cart communication apparatus 2 by radio communication. The display unit 8 displays the price information received by the radio communication processor 6, thereby informing a customer of the product price.

When identification information of plural products put into the shopping cart 1 is transmitted at one time from the RFID tags 5, there is a risk that the RFID RW 7 cannot recognize all the RFID tags 5 and properly read the identification information.

To solve this problem, Japanese Patent Application Laid-open No. 2004-164220 discloses a technique of enabling the RFID RW 7 to securely recognize the RFID tags 5 such that each RFID tag 5 responds to the RFID RW 7 in a frequency corresponding to specific ID information allocated to the RFID tag 5.

However, the above conventional technique has a problem that it is difficult to improve the efficiency of the PLU system. Specifically, it is necessary to install both the radio communication processor 6 that communicates with the radio devices 3₁ to 3ₙ, and the RFID RW 7 that communicates with the RFID tag 5, in the shopping cart 1. Furthermore, to exchange information between the radio communication processor 6 and the RFID RW 7, an additional communication apparatus is necessary. Accordingly, the cost of introducing the PLU system increases.

Furthermore, according to the conventional technique, because many radio devices 3₁ to 3ₙ are required to be installed on the ceiling of the shop, the PLU system cannot be introduced easily. Further, because the radio waves used in the radio communication have strong directivity, a communication failure easily occurs depending on the layout of display shelves.

Therefore, in recent years, it has become important to develop a PLU system that can be introduced easily and that can effectively suppress the occurrence of a communication failure.

### SUMMARY OF THE INVENTION

It is an object of the present invention to at least solve the problems in the conventional technology.

To achieve the above objectives, according to one aspect of the present invention, a communication system for communicating information about products having product RFID tags attached thereto, includes a first communicating unit installed on equipment that accommodates the products, the first communicating unit being configured to function as a reader/writer that reads first information from the product RFID tags, and to function as a communication RFID tag that transmits the first information; and a second communicating unit installed on a display shelf on which the products are laid out, the second communicating unit being configured to function as a reader/writer that receives the first information from the first communicating unit, and to function as a communication RFID tag that transmits product information corresponding to received first information, to the first communicating unit.

According to another aspect of the present invention, a communication apparatus that is installed on equipment that accommodates products attached with RFID tags, the communication apparatus being configured to communicate information about the products, includes an information transmitting unit configured to function as a reader/writer to read first information that is information about the product from the RFID tag, and to function as an RFID tag to transmit the first information; and an information receiving unit configured to function as a reader/writer to receive product information, corresponding to the first information, transmitted by an information transmitting unit of an apparatus, wherein the apparatus is configured to function as an RFID tag and is attached to a display shelf on which products are laid out.

According to still another aspect of the present invention, a communication apparatus that is attached to a display shelf on which products attached with RFID tags are laid out, the communication apparatus being configured to communicate information about the products, includes an information receiving unit configured to function as a reader/writer to receive first information that is information about the products, from an apparatus installed on equipment that accommodates the products; and an information transmitting unit configured to function as an RFID tag to transmit product information corresponding to the first information received by the information receiving unit.

According to still another aspect of the present invention, a method for communicating information about products attached with RFID tags, includes reading first information from the RFID tags, the act of reading being performed by a first communicating apparatus that is installed on equipment accommodating products, and that functions as a reader/writer; a first transmitting including transmitting the first information to a second communicating apparatus attached to a display shelf on which the products are laid out, the act of the first transmitting being performed by the first communicating apparatus that functions as an RFID tag; a first receiving including receiving the first information transmitted at the first transmitting, the act of the first receiving being performed by the second communicating apparatus that functions as a reader/writer; a second transmitting including transmitting product information corresponding to the first information, the act of the second transmitting being performed by the second communicating apparatus that functions as an RFID tag; and a second receiving including receiving the product information transmitted at the second transmitting, the act of the second receiving being performed by the first communicating apparatus that functions as a reader/writer.

According to still another aspect of the present invention, a communication apparatus that executes transmission and reception of information by radio communication, includes an RFID tag communicating unit configured to carry out radio communication with an RFID tag; a reader/writer communicating unit configured to carry out radio communication with a reader/writer in response to radio communication performed by the reader/writer with the RFID tag; and a memory configured to store information transmitted and received by radio communication carried out by the RFID tag communicating unit, and information transmitted and received by radio communication carried out by the reader/writer communicating unit.

According to still another aspect of the present invention, a method executed by a communicating apparatus that exchanges information with any one of an RFID tag and a reader/writer that communicates with the RFID tag, includes receiving, performed by a communicating unit in the communicating apparatus, information from any one of the RFID tag and the reader/writer; storing in a memory included in the communicating apparatus, the information received at the receiving; and executing any one of transmitting to the reader/writer, the information received from the RFID tag and stored in the memory, and transmitting to the RFID tag, the information received from the reader/writer and stored in the memory.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a diagram of a PLU system according to a first embodiment;
Fig. 2 illustrates a detailed configuration of a shopping cart communication apparatus;
Fig. 3 illustrates a detailed configuration of display shelf communication apparatuses;
Fig. 4 illustrates a detailed configuration of electronic inventory tags;
Fig. 5 illustrates a detailed configuration of an RFID RW/tag;
Fig. 6 illustrates a detailed configuration of a store server;
Fig. 7 is an example of product information stored in a product information memory unit;
Fig. 8 is an example of customer-oriented total information stored in a customer-oriented total information memory unit;
Fig. 9 is an example of on-shelf product quantity information that is stored in an on-shelf product quantity information memory unit;
Fig. 10 is a flowchart of a PLU process procedure according to the first embodiment;
Fig. 11 is a functional configuration of an RFID RW/tag according to a second embodiment;
Fig. 12 is a flowchart of a communication process procedure performed by the RFID RW/tag according to the second embodiment;
Fig. 13 illustrates a communication process performed by an RFID RW/tag according to a third embodiment;
Fig. 14 illustrates a functional configuration of the RFID RW/tag according to the third embodiment;
Fig. 15A is a flowchart (1) of a communication process performed by the RFID RW/tag according to the third embodiment;
Fig. 15B is a flowchart (2) of the communication process performed by the RFID RW/tag according to the third embodiment;
Fig. 16 illustrates a communication process performed by an RFID RW/tag according to a fourth embodiment;
Fig. 17 illustrates a functional configuration of the RFID RW/tag according to the fourth embodiment;
Fig. 18A is a flowchart (1) of a communication process procedure performed by the RFID RW/tag according to the fourth embodiment;
Fig. 18B is a flowchart (2) of the communication process procedure performed by the RFID RW/tag according to the fourth embodiment; and
Fig. 19 is a configuration diagram of a conventional PLU system.

### DETAILED DESCRIPTION OF THE PREFERRED EMBODIMENTS

Exemplary embodiments of the present invention are explained in detail below with reference to the accompanying drawings.

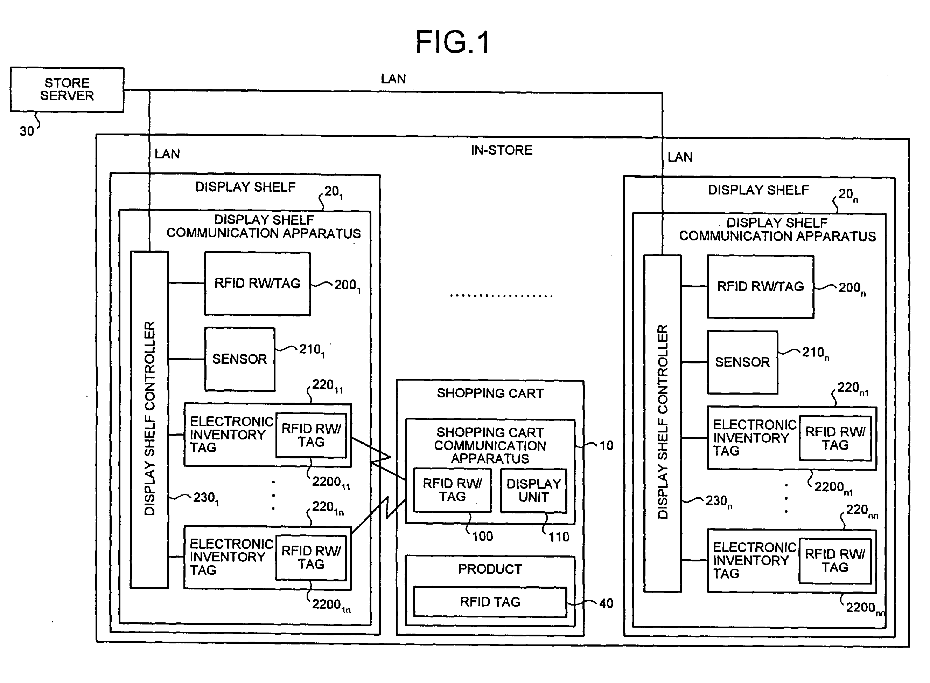

First, a configuration of a PLU (Price Look Up) system according to a first embodiment is explained with reference to Fig. 1. According to this PLU system, an RFID RW/tag that has the function of an RFID tag and an RFID RW (Reader/Writer) integrated together is installed in both a shopping cart and on display shelves on which products are laid out.

The RFID RW/tag provided in the shopping cart makes an enquiry to a store server that manages product information about prices of products and a total price of products that are put in the shopping cart, via the RFID RW/tag provided on the display shelf, thereby executing the PLU process.

As shown in Fig. 1, the PLU system includes a shopping cart communication apparatus 10 that is installed in the shopping cart, display shelf communication apparatuses 20₁ to 20ₙ that are installed on the display shelves, a store server 30 installed outside the shop and connected to the display shelf communication apparatuses 20₁ to 20ₙ via a LAN, and an RFID tag 40 that is attached to each product. The outline of each apparatus or device is explained below, and a detailed configuration is explained later.

The shopping cart communication apparatus 10 has an RFID RW/tag 100, and a display unit 110. The RFID RW/tag 100 is a communication device that has both a function of an RFID RW that reads information stored in the RFID tag 40 attached to each product and a function of an RFID tag that transmits information to other RFID RW integrated together.

This RFID RW/tag 100 reads identification information of a product from the RFID tag 40 when the product is put into the shopping cart. The RFID RW/tag 100 transmits this identification information to the store server 30 via the display shelf communication apparatuses 20₁ to 20ₙ, and makes an enquiry about the product information. The display unit 110 is a liquid crystal display, and for example, displays product information obtained when the RFID RW/tag 100 makes an enquiry to the store server 30.

The display shelf communication apparatuses 20₁ to 20ₙ include RW/tags 200₁ to 200ₙ, sensors 210₁ to 210ₙ, electronic inventory tags 220₁ to 220ₙ, and display shelf controllers 230₁ to 230ₙ. The RW/tags 200₁ to 200ₙ are communication devices having functions similar to those of the RFID RW/tag 100.

The RW/tags 200₁ to 200ₙ store identification information of display shelves, and information concerning display shelves such as information of products that are laid out on the display shelves. The RW/tags 200₁ to 200ₙ function as RFID tags that transmit the information to other RFID RW, and also as RFID RWs that read information of products laid out on the display shelves from other RFID tags.

The sensors 210₁ to 210ₙ detect whether a shopping cart is present in front of a display shelf. If the sensors 210₁ to 210ₙ detect a shopping cart, the sensors 210₁ to 210ₙ instruct the electronic inventory tags 220₁ to 220ₙ to start communication with the shopping cart communication apparatus 10.

Electronic inventory tags 220₁₁ to 220ₙₙ display information of products laid out on the display shelves. The electronic inventory tags 220₁ to 220ₙ have RFID RW/tags 2200₁₁ to 2200ₙₙ, respectively.

The RFID RW/tags 2200₁₁ to 2200ₙₙ are communication devices that have functions similar to those of the RFID RW/tag 100. When the RFID RW/tag 100 of the shopping cart communication apparatus 10 functions as an RFID tag and transmits identification information of a product, the RFID RW/tags 2200₁₁ to 2200ₙₙ function as RFID RWs and receive the information, and transmit the received information to the store server 30 via the LAN.

When product information corresponding to the transmitted identification information of the product is transmitted by the store server 30 via the LAN, the RFID RW/tags 2200₁₁ to 2200ₙₙ receive this information, and function as RFID tags and transmit the received product information to the RFID RW/tag 100 of the shopping cart communication apparatus 10.

The display shelf controllers 230₁ to 230ₙ control the RW/tags 200₁ to 200ₙ, the sensors 210₁ to 210ₙ, and the electronic inventory tags 220₁ to 220ₙ, respectively, and control communication between the shopping cart communication apparatus 10 and the store server 30.

The store server 30 manages product information such as product prices and a total price of products that are in the shopping cart. When the store server 30 receives the product information transmitted from the shopping cart communication apparatus 10, the store server 30 searches the database for prices of the products, calculates the total price of the products in the shopping cart, and transmits the price information and the total price information of the products to the RFID RW/tags 2200₁₁ to 2200ₙₙ of the display shelf communication apparatuses 20₁ to 20ₙ, respectively.

As explained above, the PLU process using the shopping cart is realized by using the RFID RW/tags 100, and the RFID RW/tags 2200₁₁ to 2200ₙₙ that have both the function of the RFID tag and the function of the RFID RW. With this arrangement, the introduction cost of the PLU system can be decreased. When the shopping cart communication apparatus 10 communicates with the electronic inventory tags 220₁₁ to 220ₙₙ, the communication can be executed securely without being interfered by an obstacle.

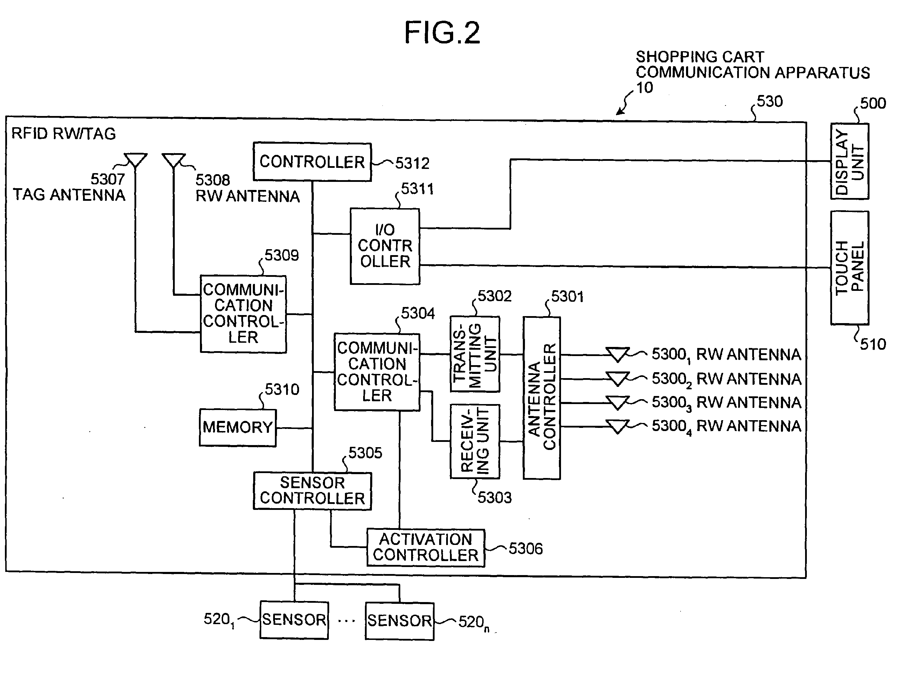

A detailed configuration of the shopping cart communication apparatus 10 is explained next, with reference to Fig. 2. As shown in Fig. 2, the shopping cart communication apparatus 10 includes a display unit 500, a touch panel 510, sensors 520₁ to 520ₙ, and an RFID RW/tag 530.

The display unit 500 is a liquid crystal display, for example, that displays product information obtained when the shopping cart communication apparatus 10 makes an enquiry to the store server 30. The touch panel 510 receives an input of information. The sensors 520₁ to 520ₙ detect that products are put into the shopping cart.

The RFID RW/tag 530 is the same as the RFID RW/tag 100 explained in Fig. 1. The RFID RW/tag 530 is a communication device that has integrated together, both a function of an RFID RW that reads information stored in the RFID tag attached to each product and receives information transmitted from other RFID tag, and a function of an RFID tag that transmits information to other RFID RW.

The RFID RW/tag 530 has RW antennas 5300₁ to 5300₄, an antenna controller 5301, a transmitting unit 5302, a receiving unit 5303, a communication controller 5304, a sensor controller 5305, an activation controller 5306, a tag antenna 5307, a RW antenna 5308, a communication controller 5309, a memory 5310, an I/O controller 5311, and a controller 5312.

The RW antennas 5300₁ to 5300₄ transmit and receive radio waves, when the RFID RW/tag 530 functions as an RFID RW and communicates with the RFID tag attached to the product. In this example, the plural RW antennas 5300₁ to 5300₄ are installed to increase the reading precision of the RFID tag.

The antenna controller 5301 controls radio waves transmitted and received by the RW antennas 5300₁ to 5300₄. When the antenna controller 5301 receives information from the transmitting unit 5302, the antenna controller 5301 transmits radio waves from the RW antennas 5300₁ to 5300₄. When the antenna controller 5301 receives radio waves from the RW antennas 5300₁ to 5300₄, the antenna controller 5301 transmits information held in the received radio waves to the receiving unit 5303.

The transmitting unit 5302 receives from the communication controller 5304, information to be transmitted to the RFID tag, and transfers this information to the antenna controller 5301 that further transmits the information to the RFID tag. The receiving unit 5303 receives from the antenna controller 5301, information received from the RFID tag, and transfers this information to the communication controller 5304.

The communication controller 5304 controls communication with the RFID tag attached to each product. To transmit information to the RFID tag, the communication controller 5304 transmits this information to the transmitting unit 5302. When information is received from the RFID tag, the communication controller 5304 receives this information from the receiving unit 5303.

The sensor controller 5305 controls the sensors 520₁ to 520ₙ. The sensor controller 5305 obtains from the sensors 520₁ to 520ₙ, information indicating that a product is put into the shopping cart, and transmits this information to the activation controller 5306.

When the sensors 520₁ to 520ₙ detect that a product is put into the shopping cart, the activation controller 5306 controls the communication controller 5304 to start communicating with the RFID tag that is attached to the product.

The tag antenna 5307 transmits and receives radio waves when the RFID RW/tag 530 functions as an RFID tag to communicate with other RFID RW. The RW antenna 5308 transmits and receives radio waves when the RFID RW/tag 530 functions as an RFID RW to communicate with other RFID tag.

The communication controller 5309 controls the communication process when the RFID RW/tag 530 functions as an RFID tag or an RFID RW. The communication controller 5309 controls communication by transmitting and receiving radio waves using the RW antenna 5308 or the tag antenna 5307.

The memory 5310 stores information read by the RFID RW/tag 530 from the RFID tag when the RFID RW/tag 530 functions as an RFID RW, stores customer identification allocated to the shopping cart as identification information, and identifies a customer who uses the shopping cart. When the RFID RW/tag 530 functions as an RFID tag, the communication controller 5309 reads the information stored in the memory 5310. The communication controller 5304 or the communication controller 5309 transmits this information.

The I/O controller 5311 controls the information input and output process that is executed by using the display unit 500 and the touch panel. When a customer ID and product information are received from the display shelf communication apparatuses 20₁ to 20ₙ, the I/O controller 5311 checks whether the customer ID coincides with the customer ID stored in the memory 5310. Only if these customer IDs match, the I/O controller 5311 makes the display unit 500 display the product information. This control is carried out to prevent the product information from being displayed in the shopping cart communication apparatus 10 of other customer.

The controller 5312 controls the entire RFID RW/tag 530, and exchanges information with each functional unit.

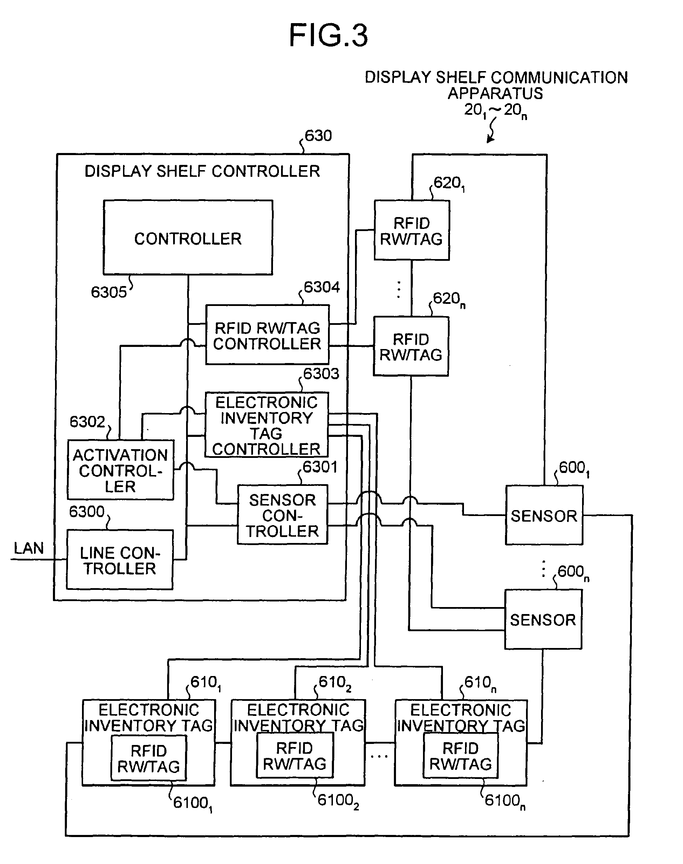

A detailed configuration of the display shelf communication apparatuses 20₁ to 20ₙ is explained next With reference to Fig. 3. As shown in Fig. 3, the display shelf communication apparatuses 20₁ to 20ₙ include sensors 600₁ to 600ₙ, electronic inventory tags 610₁ to 610ₙ, RFID RW/tags 620₁ to 620ₙ, and a display shelf controller 630.

The sensors 600₁ to 600ₙ are the same as the sensors 210₁ to 210ₙ explained in Fig. 1, and these sensors detect whether a shopping cart is present in front of the display shelf. If the sensors 600₁ to 600ₙ detect a shopping cart, the sensors 600₁ to 600ₙ instruct the electronic inventory tags 610₁ to 610ₙ and the RFID RW/tags 620₁ to 620ₙ to execute communication.

The electronic inventory tags 610₁ to 610ₙ are the same as the electronic inventory tags 220₁₁ to 220ₙₙ explained in Fig. 1. The electronic inventory tags 610₁ to 610ₙ display information of products laid out on the display shelves. The electronic inventory tags 610₁ to 610ₙ have RFID RW/tags 6100₁ to 6100ₙ, respectively.

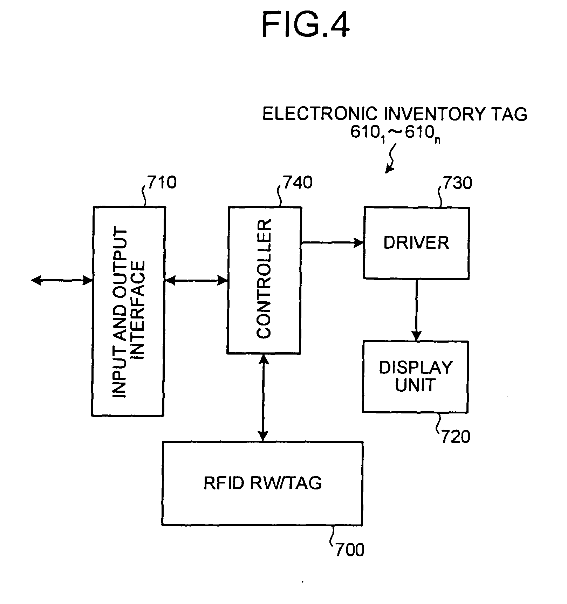

Fig. 4 is a diagram of a detailed configuration of the electronic inventory tags 610₁ to 610ₙ. Each of the electronic inventory tags 610₁ to 610ₙ includes an RFID RW/tag 700, an input and output interface 710, a display unit 720, a driver 730, and a controller 740.

The RFID RW/tag 700 corresponds to the RFID RW/tags 2200₁₁ to 2200ₙₙ shown in Fig. 1 and the RFID RW/tags 6100₁ to 6100ₙ shown in Fig. 3. The RFID RW/tag 700 functions as an RFID RW or an RFID tag, and executes communication with the shopping cart communication apparatus 10 installed in the shopping cart and with the display shelf controller 630 shown in Fig. 3.

The input and output interface 710 executes an information input and output process with the display shelf controller 630. The display unit 720 is a liquid crystal display, for example, that displays product information. The driver 730 drives the display unit 720. The controller 740 controls the entirety of the electronic inventory tags 610₁ to 610ₙ, and exchanges information with each functional unit.

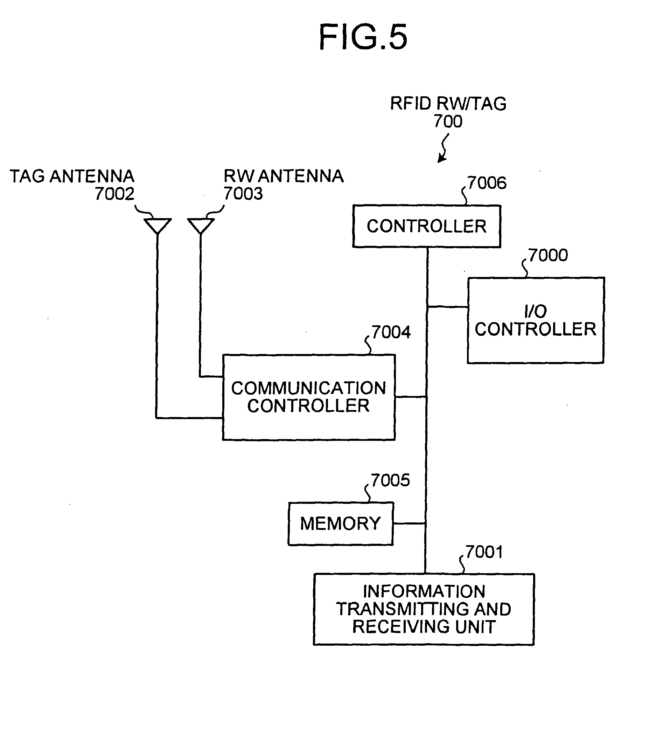

Fig. 5 is a diagram of a detailed configuration of the RFID RW/tag 700. The RFID RW/tag 700 includes an I/O controller 7000, an information transmitting and receiving unit 7001, a tag antenna 7002, an RW antenna 7003, a communication controller 7004, a memory 7005, and a controller 7006.

The I/O controller 7000 controls information input to or output from the display unit and the touch panel when the liquid crystal display and the touch panel are connected to the RFID RW/tag 700. The information transmitting and receiving unit 7001 exchanges information with the controller 740 shown in Fig. 4.

The tag antenna 7002 transmits and receives radio waves when the RFID RW/tag 700 functions as an RFID tag to communicate with other RFID RW. The RW antenna 7003 transmits and receives radio waves when the RFID RW/tag 700 functions as an RFID RW to communicate with other RFID tag.

The communication controller 7004 controls the communication process when the RFID RW/tag 700 functions as an RFID tag or an RFID RW to transmit and receive radio waves. The communication controller 7004 controls the communication by transmitting and receiving radio waves using the tag antenna 7002 or the RW antenna 7003.

The memory 7005 stores information read by the RFID RW/tag 700 from the RFID tag when the RFID RW/tag 700 functions as an RFID RW. When the RFID RW/tag 700 functions as an RFID tag, the communication controller 7004 reads the information stored in the memory 7005, and transmits this information from the tag antenna 7002.

The controller 7006 controls the entirety of the RFID RW/tag 700, and exchanges information with each functional unit.

Referring back to Fig. 3, the RFID RW/tags 620₁ to 620ₙ correspond to the RW/tags 200₁₁ to 200ₙₙ explained in Fig. 1, and store identification information of display shelves and information of products laid out on the display shelves. The RFID RW/tags 620₁ to 620ₙ function as RFID tags to transmit these pieces of information to other RFID RWs, and also function as RFID RWs to read information of the products laid out on the display shelves from other RFID tags.

The configuration of the RFID RW/tags 620₁ to 620ₙ is the same as that of the RFID RW/tag 700 shown in Fig. 5. However, the information transmitting and receiving unit 7001 of the RFID RW/tags 620₁ to 620ₙ exchanges information with the RFID RW/tag controller 6304 and the sensors 600₁ to 600ₙ shown in Fig. 3.

The display shelf controller 630 controls the sensors 600₁ to 600ₙ, the electronic inventory tags 610₁ to 610ₙ, and the RFID RW/tags 620₁ to 620ₙ, and controls communication between the shopping cart communication apparatus 10 installed in the shopping cart and the store server 30.

The display shelf controller 630 includes a line controller 6300, a sensor controller 6301, an activation controller 6302, an electronic inventory tag controller 6303, an RFID RW/tag controller 6304, and a controller 6305.

The line controller 6300 controls a connection or a disconnection of a communication line when carrying out communication with the store server 30 via the LAN, and executes communication. The sensor controller 6301 controls the activation of the sensors 600₁ to 600ₙ. When the sensors 600₁ to 600ₙ detect a shopping cart in front of the display shelf, the sensor controller 6301 receives notification from the sensors 600₁ to 600ₙ.

When the sensor controller 6301 receives the notification from the sensors 600₁ to 600ₙ, the activation controller 6302 requests the electronic display shelf inventory tag controller 6303 and the RFID RW/tag controller 6304 to activate the RFID RW/tags 620₁ to 620ₙ and the RFID RW/tags 6100₁ to 6100ₙ.

The electronic inventory tag controller 6303 controls the activation of the electronic inventory tags 610₁ to 610ₙ, and exchanges information with the electronic inventory tags 610₁ to 610ₙ and the line controller 6300.

The RFID RW/tag controller 6304 controls the activation of the RFID RW/tags 620₁ to 620ₙ, and exchanges information with the RFID RW/tags 620₁ to 620ₙ and the line controller 6300.

The controller 6305 controls the entire display shelf controller 630, and exchanges information with each functional unit.

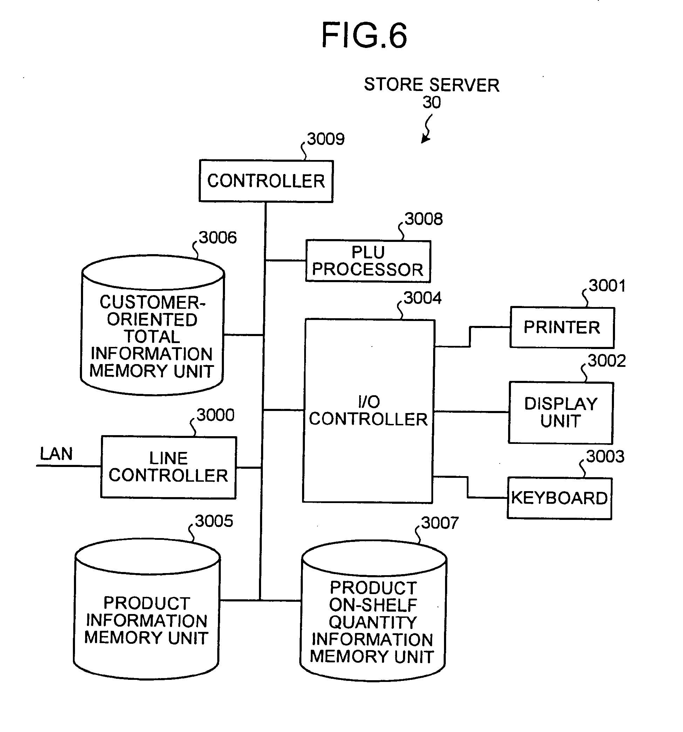

A detailed configuration of the store server 30 is explained next. Fig. 6 is a diagram of the detailed configuration of the store server 30. As shown in Fig. 6, the store server 30 includes a line controller 3000, a printer 3001, a display unit 3002, a keyboard 3003, an I/O controller 3004, a product information memory unit 3005, a customer-oriented total information memory unit 3006, an on-shelf product quantity information memory unit 3007, a PLU processor 3008, and a controller 3009.

The line controller 3000 controls a connection or a disconnection of a communication line at the time of communicating with the display shelf communication apparatuses 20₁ to 20ₙ via the LAN, and executes communication. The printer 3001 prints various information. The display unit 3002 displays information. The keyboard 3003 is an input unit that receives input of information. The I/O controller 3004 controls information input and output process carried out using the printer 3001, the display unit 3002, and the keyboard 3003.

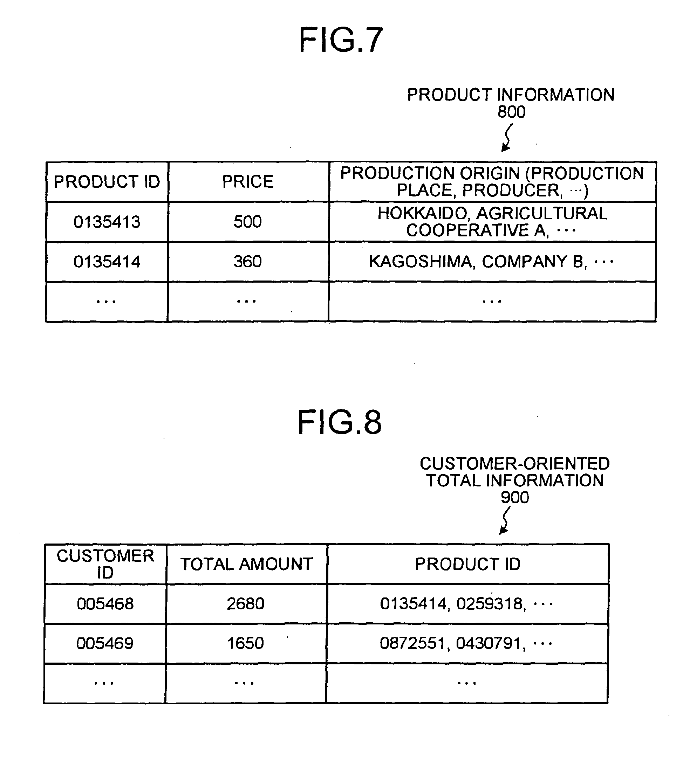

The product information memory unit 3005 is a hard disk drive or the like, and stores various kinds of product information, such as product prices, used in the PLU process. Fig. 7 is an example of product information 800 stored in the product information memory unit 3005. As shown in Fig. 7, the product information 800 includes product IDs, price, and production origin.

The product ID identifies a product. The price is a selling price of a product. The production origin is a production place and a producer of the product.

Referring back to Fig. 6, the customer-oriented total information memory unit 3006 is a hard disk drive or the like that stores a total price of products in the shopping cart for the customer. Fig. 8 is an example of customer-oriented total information 900 stored in the customer-oriented total information memory unit 3006. As shown in Fig. 8, the customer-oriented total information 900 includes customer IDs, total prices, and product IDs.

A customer ID is allocated to each shopping cart, and identifies a customer who is using the shopping cart. The total price is a total price of products in the shopping cart of that customer. The product ID identifies the products in the shopping cart of the customer.

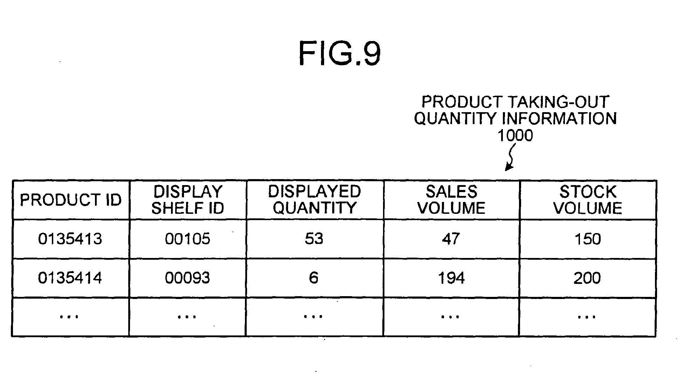

With reference to Fig. 6, the on-shelf product quantity information memory unit 3007 is a hard disk drive or the like that stores a quantity of products that are laid out on the product display shelf. Fig. 9 is an example of on-shelf product quantity information 1000 that is stored in the on-shelf product quantity information memory unit 3007. As shown in Fig. 9, the on-shelf product quantity information 1000 includes product IDs, display shelf IDs, displayed quantities, sales volume, and stock volume.

The product ID identifies products. The display shelf ID identifies a display shelf on which products are laid out. The displayed quantity is a quantity of products laid out on the display shelf. The sales volume is a quantity of products taken out from the display shelf. The stock volume is a quantity of products stored in the warehouse or the like.

The displayed quantity and the sales volume are updated when a product is picked up from the display shelf and put into the shopping cart, and also when the product ID of the product put into the shopping cart is transmitted from the shopping cart communication apparatus 10 to the store server 30 via the display shelf communication apparatuses 20₁ to 20ₙ.

Specifically, a product ID included in the customer-oriented total information 900 is read out, and a total quantity of each product taken out from each display shelf and put into the shopping cart is calculated. The displayed quantity and the sales volume are updated based on this calculation. If a customer purchases a product without using a shopping cart, a product ID of this product is read by a cash register. This read information is transmitted to the store server 30, and the displayed quantity and the sales volume are updated.

When products held in the warehouse are laid out on the display shelf, and also when a manager inputs the displayed quantity of the laid-out products using the keyboard 3003 of the store server 30, the displayed quantity and the stock volume is updated based on the information of the quantity.

Referring back to Fig. 6, the PLU processor 3008 executes the PLU processing upon receiving a PLU processing request including product IDs and a customer ID from the shopping cart communication apparatus 10.

Specifically, upon receiving the PLU processing request from the shopping cart communication apparatus 10, the PLU processor 3008 searches the product information 800 for prices and production origin corresponding to all the product IDs.

The PLU processor 3008 calculates a total price of products corresponding to the received product IDs, and stores the calculated total price and the product IDs into the customer-oriented total information 900. The PLU processor 3008 updates the on-shelf product quantity information 1000 corresponding to the product IDs.

The PLU processor 3008 transmits the information of the prices of the products corresponding to the received product IDs, the total price of the products, and the customer ID to the shopping cart communication apparatus 10 via the display shelf communication apparatuses 20₁ to 20ₙ.

The controller 3009 controls the entire store server 30, and exchanges information with each functional unit.

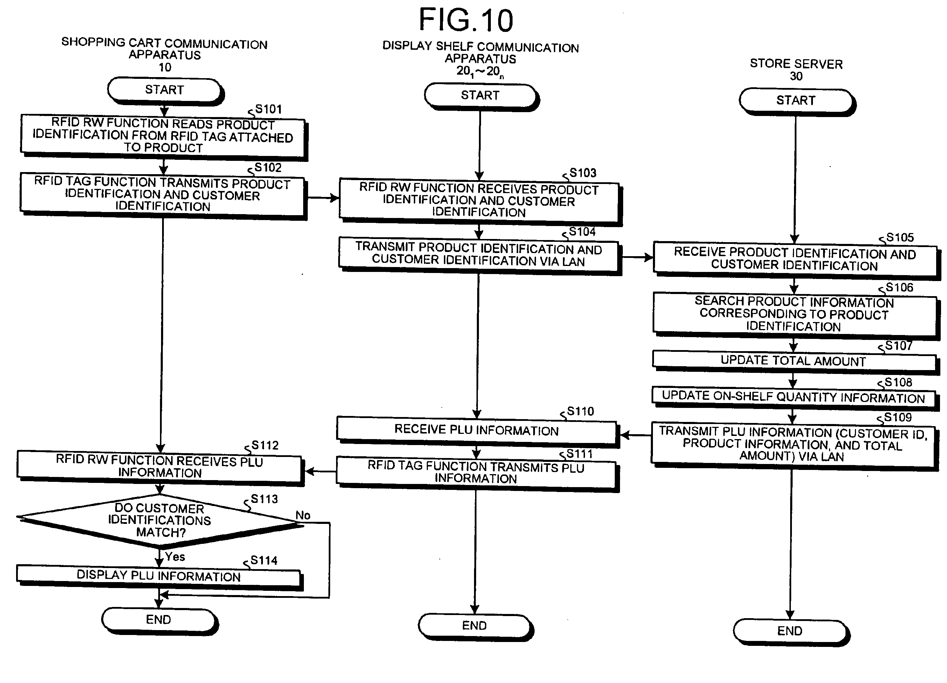

A PLU process procedure according to the first embodiment is explained next. Fig. 10 is a flowchart of the PLU process procedure according to the first embodiment.

As shown in Fig. 10, the shopping cart communication apparatus 10 first functions as an RFID RW, and reads a product ID from the RFID tag 40 attached to a product that is put into the shopping cart (step S101).

The shopping cart communication apparatus 10 functions as an RFID tag, and transmits the product ID and a customer ID of the shopping cart, to the display shelf communication apparatuses 20₁ to 20ₙ (step S102).

The display shelf communication apparatuses 20₁ to 20ₙ function as RFID RWs, and receive the product ID and the customer ID from the shopping cart communication apparatus 10 (step S103). The display shelf communication apparatuses 20₁ to 20ₙ transmit the product ID and the customer ID to the store server 30 via the LAN (step S104).

The store server 30 receives the product ID and the customer ID transmitted from the display shelf communication apparatuses 20₁ to 20ₙ (step S105). The store server 30 searches the product information memory unit 3005 for product information such as the price corresponding to the product ID (step S106), calculates a total of product prices, and updates the customer-oriented total information 900 (step S107).

The store server 30 updates the on-shelf product quantity information 1000 based on the product ID included in the customer-oriented total information 900 (step S108). Thereafter, the store server 30 transmits PLU information containing product-related information that is, a customer ID, product prices, and production origins, and a total price to the display shelf communication apparatuses 20₁ to 20ₙ via the LAN (step S109).

The display shelf communication apparatuses 20₁ to 20ₙ receive the PLU information transmitted from the store server 30 (step S110), and function as an RFID tag to transmit the PLU information to the shopping cart communication apparatus 10 (step S111).

The shopping cart communication apparatus 10 functions as an RFID RW to receive the PLU information from the display shelf communication apparatuses 20₁ to 20ₙ (step S112). The shopping cart communication apparatus 10 then checks whether the customer ID included in the PLU information matches the customer ID of the shopping cart communication apparatus 10 (step S113).

If the customer IDs match (Yes at step S113), the shopping cart communication apparatus 10 displays the PLU information (step S114), and the process ends. If the customer IDs do not match (No at step S113), the shopping cart communication apparatus 10 does not display the PLU information, and the process ends.

As described above, according to the first embodiment, the shopping cart communication apparatus 10 installed in the shopping cart that accommodates products attached with the RFID tags 40 functions as a reader/writer, and communicates with the RFID tag 40 attached to the products. Thus, the shopping cart communication apparatus 10 reads the information transmitted from the RFID tags 40 attached to the products. The shopping cart communication apparatus 10 functions as an RFID tag, and transmits the read information to the display shelf communication apparatuses 20₁ to 20ₙ attached to the display shelves on which the products are laid out. The display shelf communication apparatuses 20₁ to 20ₙ function as readers/writers, and receive the information transmitted from the shopping cart communication apparatus 10. The display shelf communication apparatuses 20₁ to 20ₙ function as RFID tags, and transmit product information corresponding to the received information. The shopping cart communication apparatus 10 functions as a reader/writer, and receives the product information transmitted from the display shelf communication apparatuses 20₁ to 20ₙ. Thus, the apparatuses that function both as an RFID tag and as a reader/writer are installed in the shopping cart and on the display shelves. Therefore, the PLU system can be introduced easily, and the occurrence of a communication failure can be suppressed effectively.

According to the first embodiment, the shopping cart apparatus functions as an RFID tag that transmits the product ID read from the RFID tag 40 attached to the product, and the customer ID of the shopping cart that identifies a customer using the shopping cart. The shopping cart apparatus also functions as a reader/writer that receives the product information corresponding to the product ID and the customer ID, and outputs this product information. With this arrangement, the PLU process to obtain product price information can be executed efficiently.

According to the first embodiment, the product information indicates a total price of products accommodated in the shopping cart. Therefore, the customer can easily know the total price of the products, thereby increasing the convenience of the customer.

According to the first embodiment, the RFID RW/tag and the display unit are installed in the shopping cart. However, the RFID RW/tag and the display unit can be also installed in a portable shopping basket, thereby executing the above PLU processing.

According to the first embodiment, an integrated FRID RW/tag having the function of an RFID RW or an RFID tag carries out communication. When the function of an RFID RW and the function of an RFID tag become effective at the same time, and also when the integrated FRID RW/tag carries out communication with other RFID RW and other RFID tag at the same time, there is a risk that the integrated RFID RW/tag cannot communicate normally due to the interference of radio waves.

According to a second embodiment, an RFID RW/tag, which executes control such that both the RFID RW function and the RFID tag function become exclusively valid, thereby preventing interference of radio waves, is explained below.

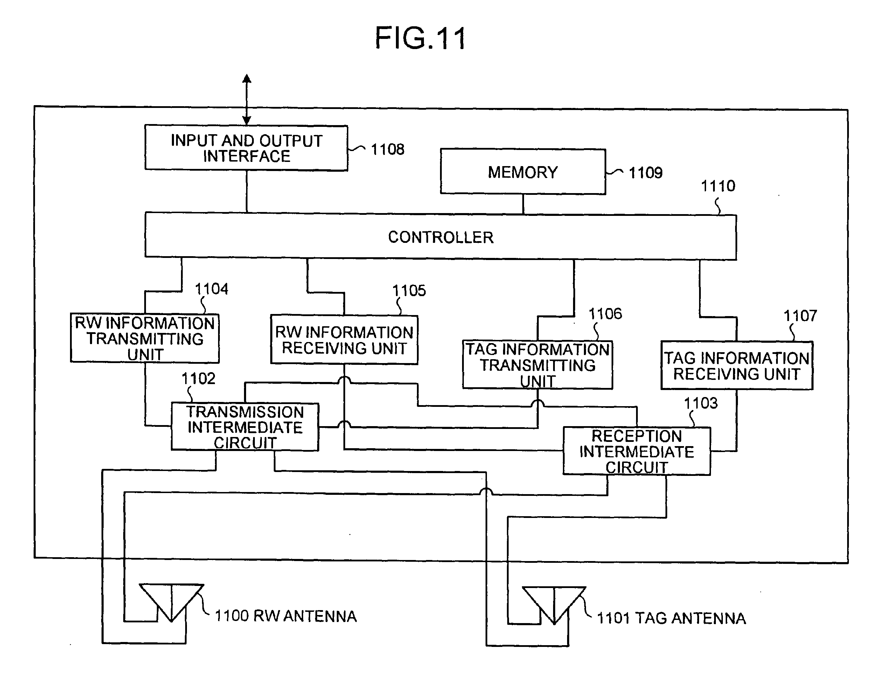

First, a functional configuration of an RFID RW/tag according to the second embodiment is explained with reference to Fig. 11. The I/O controller 5311 and the sensor controller 5305 included in the RFID RW/tag 530 shown in Fig. 2, and the I/O controller 7000 included in the RFID RW/tag 700 shown in Fig. 5 are omitted from the functional configuration diagram of the RFID RW/tag shown in Fig. 11.

The RFID RW/tag of the second embodiment has both the function of the RFID tag and of the RFID RW that stores information in the RFID tag and reads the information stored in the RFID tag, and has a memory used by both functions.

Specifically, the RFID RW/tag has an RW antenna 1100, a tag antenna 1101, a transmission intermediate circuit 1102, a reception intermediate circuit 1103, an RW information transmitting unit 1104, an RW information receiving unit 1105, a tag information transmitting unit 1106, a tag information receiving unit 1107, an input and output interface 1108, a memory 1109, and a controller 1110.

The RW antenna 1100 receives and emits radio waves when the RFID RW/tag functions as an RFID RW to carry out radio communication with the RFID tag. The tag antenna 1101 receives and emits waves when the RFID RW/tag functions as an RFID tag to carry out radio communication with the RFID RW.

The transmission intermediate circuit 1102 stops transmitting information to the RFID RW when the RFID RW/tag transmits information to the RFID tag, and makes the reception intermediate circuit 1103 stop receiving information from the RFID tag or the RFID RW.

When transmitting information to the RFID RW, the transmission intermediate circuit 1102 stops transmitting information to the RFID tag, and makes the reception intermediate circuit 1103 stop receiving information from the RFID tag or the RFID RW.

When receiving information from the RFID tag, the reception intermediate circuit 1103 stops receiving information from the RFID RW, and makes the transmission intermediate circuit 1102 stop transmitting information to the RFID tag or the RFID RW.

At the time of receiving information from the RFID RW, the reception intermediate circuit 1103 stops receiving information from the RFID tag, and makes the transmission intermediate circuit 1102 stop transmitting information to the RFID tag or the RFID RW.

The RW information transmitting unit 1104 transmits information to the RFID RW. The RW information receiving unit 1105 receives information from the RFID RW. The tag information transmitting unit 1106 transmits information to the RFID tag. The tag information receiving unit 1107 receives information from the RFID tag.

The input and output interface 1108 is a network interface to connect the RFID RW/tag to an external computer. The input and output interface 1108 exchanges information using RS (Recommended Standard) -232C and USB (Universal Serial Bus) standards. The memory 1109 stores information exchanged with the RFID tag and the RFID RW.

The controller 1110 includes a CPU (Central Processing Unit) or the like, and controls the entirety of the RFID RW/tag and exchanges data with each functional unit. Particularly, the controller 1110 receives information transmission and reception requests from the RW information transmitting unit 1104, the RW information receiving unit 1105, the tag information transmitting unit 1106, and the tag information receiving unit 1107. The controller 1110 decides whether a received transmission and reception request is a request for transmitting information to the RFID RW, a request for receiving information from the RFID RW, a request for transmitting information to the RFID tag, or a request for receiving information from the RFID tag.

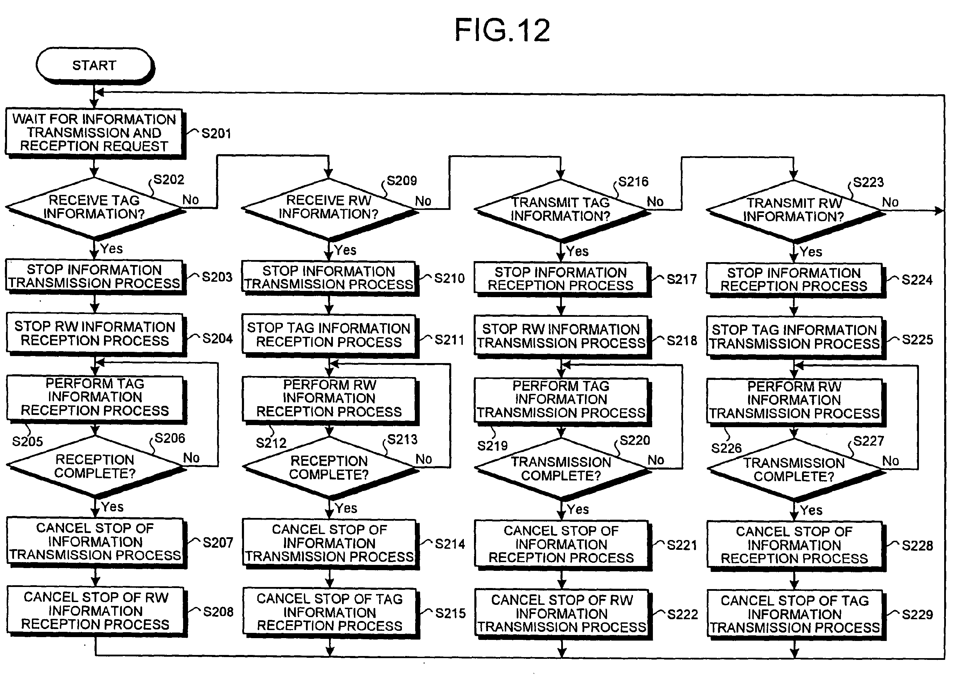

A communication process procedure performed by the RFID RW/tag according to the second embodiment is explained next. Fig. 12 is a flowchart of the communication process procedure performed by the RFID RW/tag according to the second embodiment.

As shown in Fig. 12, the controller 1110 of the RFID RW/tag waits for an information transmission and reception request (step S201). The controller 1110 checks whether the request is a tag information reception request for receiving information from the RFID tag (step S202).

If the information transmission and reception request is a tag information reception request (Yes at step S202), the reception intermediate circuit 1103 makes the transmission intermediate circuit 1102 stop transmitting information (step S203).

The reception intermediate circuit 1103 stops the RW information reception process of receiving information from the RFID RW (step S204). Thereafter, the tag information receiving unit 1107 executes a tag information reception process (step S205).

The tag information receiving unit 1107 checks whether the tag information reception process is complete (step S206). If the tag information reception process is not complete (No at step S206), the process returns to step S205, and the tag information receiving unit 1107 continues the tag information reception process.

When the tag information reception process ends (Yes at step S206), the reception intermediate circuit 1103 makes the transmission intermediate circuit 1102 cancel the stop of the information transmission process (step S207), and cancels the stop of the RW information reception process (step S208). The process returns to step S201, and the subsequent process is continued.

If the information transmission and reception request is not a tag information reception request at step S202 (No at step S202), the controller 1110 checks whether the request is an RW information reception request for receiving information from the RFID RW (step S209).

If the information transmission and reception request is an RW information reception request (Yes at step S209), the reception intermediate circuit 1103 makes the transmission intermediate circuit 1102 stop the information transmission process (step S210).

The reception intermediate circuit 1103 stops the tag information reception process of receiving information from the RFID tag (step S211). Thereafter, the RW information receiving unit 1105 executes the RW information reception process (step S212).

The RW information receiving unit 1105 checks whether the RW information reception process is complete (step S213). If the RW information reception process is not complete (No at step S213), the process returns to step S212, and the RW information receiving unit 1105 continues the RW information reception process.

If the RW information reception process is complete (Yes at step S213), the reception intermediate circuit 1103 makes the transmission intermediate circuit 1102 cancel the stop of the information transmission process (step S214), and cancels the stop of the tag information reception process (step S215). The process returns to step S201, and the subsequent process is continued.

If the information transmission and reception request is not an RW information reception request at step S209 (No at step S209), the controller 1100 checks whether this request is a tag information transmission request for transmitting information to the RFID tag (step S216).

If the information transmission and reception request is a tag information transmission request (Yes at step S216), the transmission intermediate circuit 1102 makes the reception intermediate circuit 1103 stop the information reception process (step S217).

The transmission intermediate circuit 1102 stops the RW information transmission process of transmitting information to the RFID RW (step S218). Thereafter, the tag information transmitting unit 1106 executes the tag information transmission process (step S219).

The tag information transmitting unit 1106 checks whether the tag information transmission process is complete (step S220). If the tag information transmission process is not complete (No at step S220), the process returns to step S219, and the tag information transmitting unit 1106 continues the tag information transmission process.

If the tag information transmission process ends (Yes at step S220), the transmission intermediate circuit 1102 makes the reception intermediate circuit 1103 cancel the stop of the information reception process (step S221), and cancels the stop of the RW information transmission process (step S222). The process returns to step S201, and the subsequent process is continued.

If the information transmission and reception request is not a tag information transmission request at step S216 (No at step S216), the controller 1110 checks whether this request is an RW information transmission request for transmitting information to the RDID RW (step S223).

If the information transmission and reception request is an RW information transmission request (Yes at step S223), the transmission intermediate circuit 1102 makes the reception intermediate circuit 1103 stop the information reception process (step S224).

The transmission intermediate circuit 1102 stops the tag information transmission process of transmitting information to the RFID tag (step S225). Thereafter, the RW information transmitting unit 1104 executes the RW information transmission process (step S226).

The RW information transmitting unit 1104 checks whether the RW information transmission process is complete (step S227). If the RW information transmission process is not complete (No at step S227), the process returns to step S226, and the RW information transmitting unit 1104 continues the RW information transmission process.

When the RW information transmission process ends (Yes at step S227), the transmission intermediate circuit 1102 makes the reception intermediate circuit 1103 cancel the stop of the information reception process (step S228), and cancels the stop of the tag information transmission process (step S229). The process shifts to step S201, and the subsequent process is continued.

When the information transmission and reception request is not an RW information transmission request at step S223 (No at step S223), the process shifts to step S201, and the subsequent process is continued.

As described above, according to the second embodiment, the tag information transmitting unit 1106 and the tag information receiving unit 1107 carry out radio communication with the RFID tag. The RW information transmitting unit 1104 and the RW information receiving unit 1105 carry out radio communication with the RFID RW in response to the RFID RW that carries out radio communication with the RFID tag. The memory 1109 stores information transmitted or received by radio communication. Therefore, the RFID RW/tag has both functions of the RFID tag and the reader/writer, and can easily share the information when the RFID RW/tag functions as the RFID tag and the RFID RW.

According to the second embodiment, when the transmission intermediate circuit 1102 and the reception intermediate circuit 1103 carry out radio communication with the RFID tag or radio communication with the RFID RW, other communication is stopped. Therefore, interference of radio waves that occurs when plural communication is carried out simultaneously can be prevented.

Although a power source is omitted from the functional configuration shown in Fig. 11, a power source for driving the controller 1100 and the like is provided in actual practice. A conventional passive RFID tag does not have a power source. However, here, in the RFID RW/tag, the RW information transmitting unit 1104 and the RW information receiving unit 1105 that have the function of the RFID tag can receive power from the power source. Therefore, the RFID RW/tag can carry out communication stably as the RFID tag.

In the second embodiment, it is explained that the RFID RW/tag carries out communication with both the RFID tag and the RFID RW. It is also possible to divide frequency bands of radio waves into between a frequency band used to communicate with the RFID tag and a frequency band used to communicate with the RFID RW, thereby preventing interference of radio waves.

According to a third embodiment, it is explained that a frequency band used to communicate with the RFID tag is different from a frequency band used to communicate with the RFID RW.

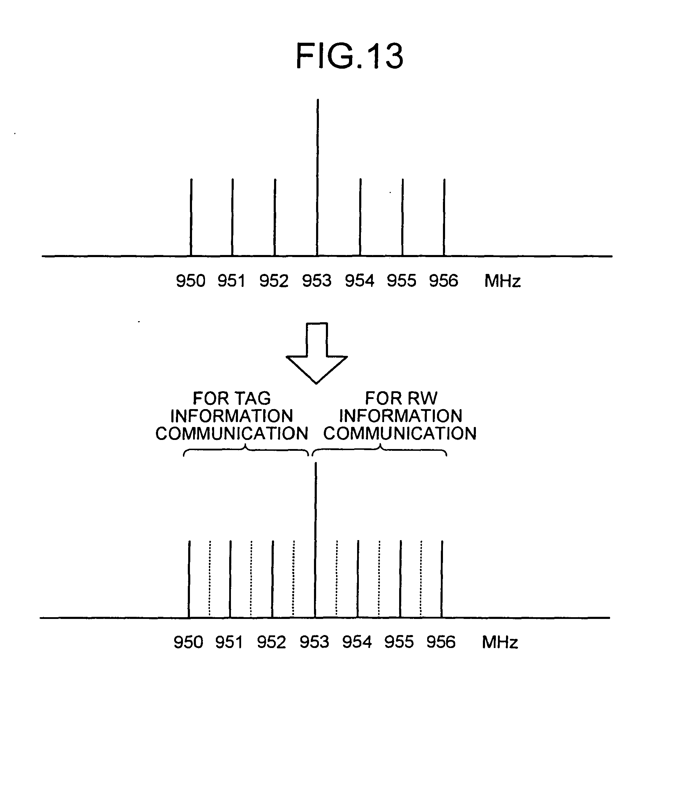

First, a communication process performed by an RFID RW/tag according to the third embodiment is explained. Fig. 13 is an explanatory diagram of the communication process performed by the RFID RW/tag according to the third embodiment.

As shown in Fig. 13, if frequency bands from 950 megahertz to 956 megahertz are used for communication, the bands are usually divided in 1 megahertz unit. Information exchange is carried out by switching the frequencies of radio waves.

However, when the frequency of a radio wave used by one RFID RW/tag to communicate with the RFID tag coincides with the frequency of a wave used by other RFID RW/tag to communicate with the RFID RW due to the same frequency switch pattern, there is a risk that these radio waves interfere with each other and these RFID RW/tags cannot execute transmission and reception of information properly.

Therefore, communication bands of radio waves are divided into a frequency band used to communicate with the RFID tag and a frequency band used to communicate with the RFID RW. For example, in Fig. 13, the frequency band is divided into two areas with 953 megahertz as a boundary. A lower frequency band area is allocated to communicate with the RFID tag. Frequency is switched at every 0.5 megahertz to communicate with an external RFID tag.

A higher frequency band area is allocated to communicate with the RFID RW. Frequency is switched at every 0.5 megahertz to communicate with an external RFID RW.

When an RFID RW that transmits information to the RFID TW/tag does not have the function of allocating the frequency band, this RFIF RW transmits information using a radio wave within the frequency band area of 950 megahertz to 956 megahertz. However, the RFID RW/tag according to the present embodiment can stop the reception of information from the RFID tag and the transmission of information to the RFID tag and the RFID RW, during the reception of information from the RFID RW. Therefore, an interruption of radio waves can be prevented.

Similarly, when an RFID tag transmits information using a wave within the frequency band area of 950 megahertz to 956 megahertz, the RFID RW/tag according to the present embodiment can stop the reception of information from the RFID RW and the transmission of information to the RFID tag and the RFID RW. Therefore, an interruption of radio waves can be prevented.

In the above example, the frequency band has a range from 950 megahertz to 956 megahertz. However, the frequency band is not limited to this, and other frequency band can be also used.

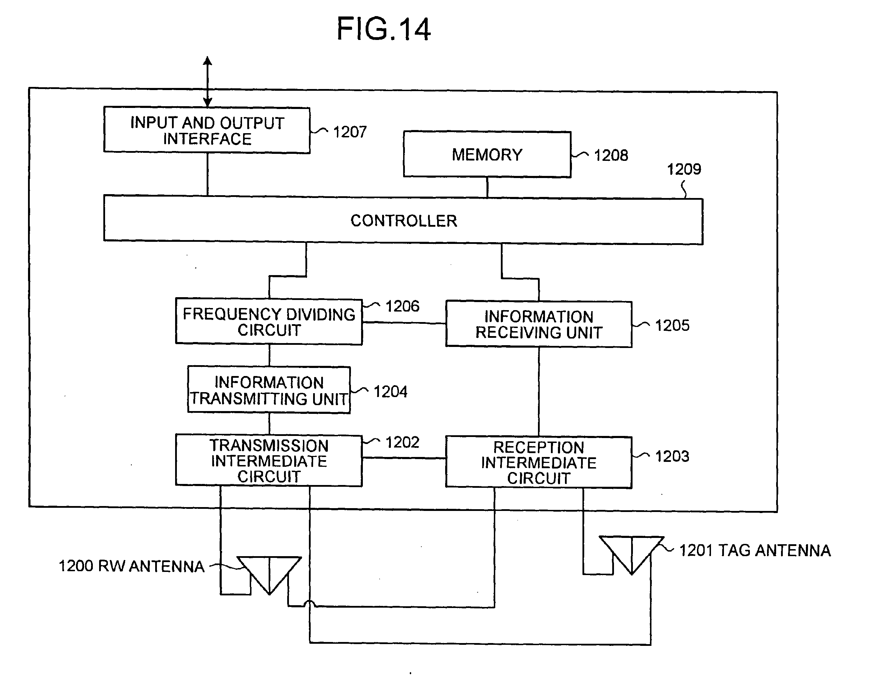

A functional configuration of the RFID RW/tag according to the third embodiment is explained next. Fig. 14 depicts the functional configuration of the RFID RW/tag according to the third embodiment.

As shown in Fig. 14, this RFID RW/tag has an RW antenna 1200, a tag antenna 1201, a transmission intermediate circuit 1202, a reception intermediate circuit 1203, an information transmitting unit 1204, an information receiving unit 1205, a frequency dividing circuit 1206, an input and output interface 1207, a memory 1208, and a controller 1209.

The RW antenna 1200 receives and emits radio waves when the RFID RW/tag functions as an RFID RW to communicate with the RFID tag. The tag antenna 1201 receives and emits radio waves when the RFID RW/tag functions as an RFID tag to communicate with the RFID RW.

The transmission intermediate circuit 1202 stops transmitting information to the RFID RW when the RFID RW/tag transmits information to the RFID tag, and makes the reception intermediate circuit 1203 stop receiving information from the RFID tag or the RFID RW.

When transmitting information to the RFID RW, the transmission intermediate circuit 1202 stops transmitting information to the RFID tag, and makes the reception intermediate circuit 1203 stop receiving information from the RFID tag or the RFID RW.

When receiving information from the RFID tag, the reception intermediate circuit 1203 stops receiving information from the RFID RW, and makes the transmission intermediate circuit 1202 stop transmitting information to the RFID tag or the RFID RW.

At the time of receiving information from the RFID RW, the reception intermediate circuit 1203 stops receiving information from the RFID tag, and makes the transmission intermediate circuit 1202 stop transmitting information to the RFID tag or the RFID RW.

The information transmitting unit 1204 transmits information to the RFID tag or the RFID RW. The information receiving unit 1205 receives information from the RFID tag or the RFID RW.

The frequency dividing circuit 1206 divides the frequency band into the frequency band used to communicate with the RFID tag and the frequency band used to communicate with the RFID RW as shown in Fig. 13. The frequency dividing circuit 1206 sets a radio wave frequency depending on communication carried out with the RFID tag and communication carried out with the RFID RW.

The input and output interface 1207 is a network interface to connect the RFID RW/tag to an external computer. The input and output interface 1207 exchanges information using RS-232C and USB standards. The memory 1208 stores information exchanged with the RFID tag and the RFID RW.

The controller 1209 includes a CPU or the like, and controls the entirety of the RFID RW/tag and exchanges data with each functional unit. Particularly, the controller 1209 receives information transmission and reception requests from the information transmitting unit 1204 and the information receiving unit 1205. The controller 1209 decides whether a received transmission and reception request is a request for transmitting information to the RFID RW, a request for receiving information from the RFID RW, a request for transmitting information to the RFID tag, or a request for receiving information from the RFID tag.

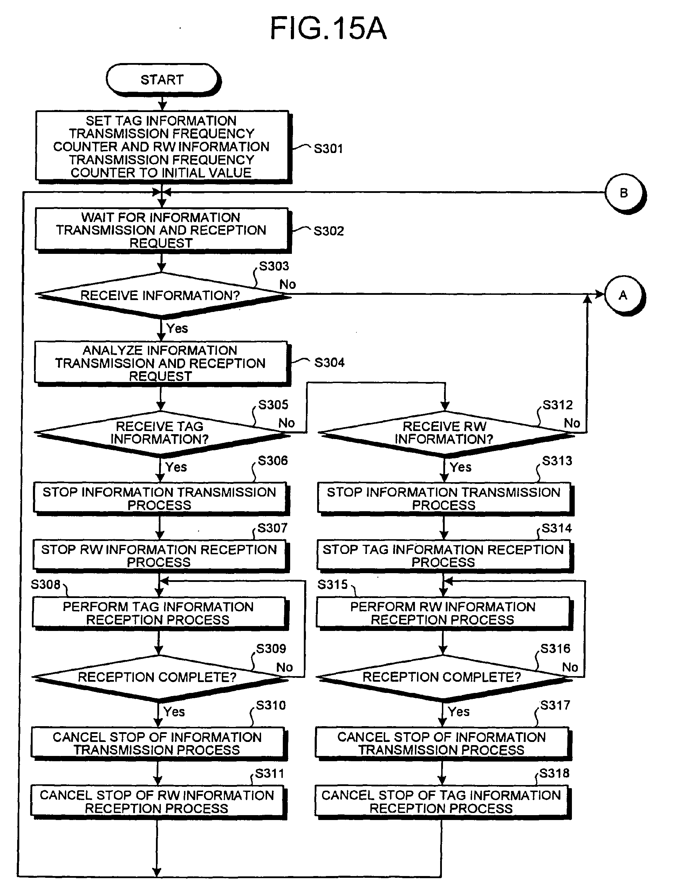

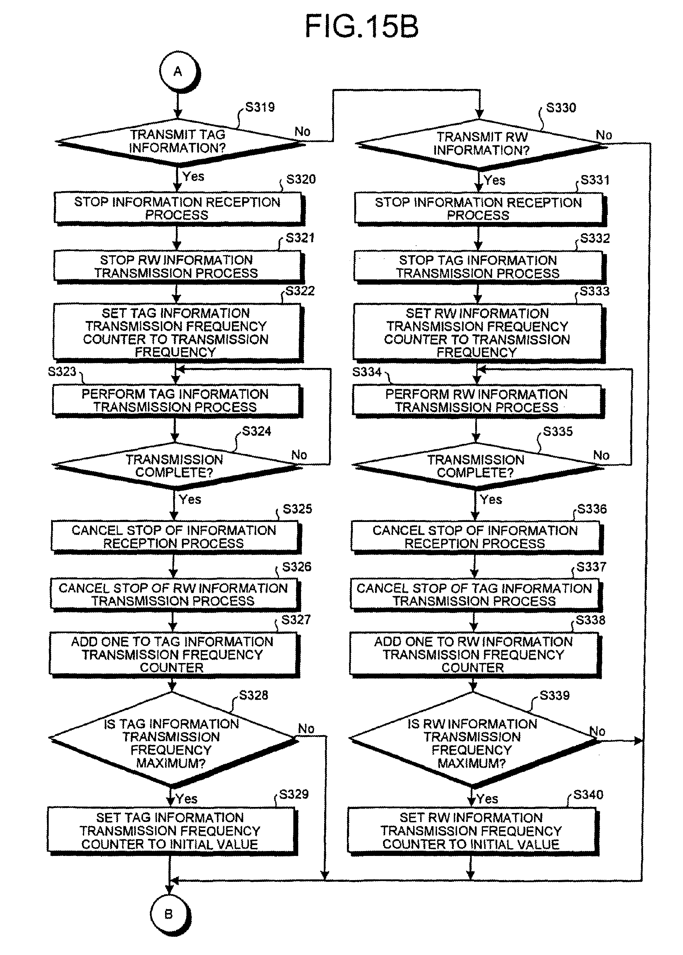

The communication process performed by the RFID RW/tag according to the third embodiment is explained next. Figs. 15A and Fig. 15B are flowcharts (1) and (2) of the communication process performed by the RFID RW/tag according to the third embodiment, respectively.

As shown in Fig. 15A, first, the frequency dividing circuit 1206 of the RFID RW/tag initializes a tag information transmission frequency counter and an RW information transmission frequency counter that are used to determine frequencies of radio waves at the time of transmitting information to the RFID tag and the RFID RW (step S301). For example, the RFID RW/tag initializes the frequency to 950 megahertz and 953 megahertz when the frequency band is divided as shown in Fig. 13.

The controller 1209 waits for an information transmission and reception request (step S302). The controller 1209 checks whether the request is an information reception request for receiving information from the RFID tag or the RFID RW (step S303).

If the information transmission and reception request is an information reception request (Yes at step S303), the controller 1209 analyzes the information transmission and reception request (step S304), and checks whether the information transmission and reception request is a tag information reception request for receiving information from the RFID tag (step S305).

If the information transmission and reception request is a tag information reception request (Yes at step S305), the reception intermediate circuit 1203 makes the transmission intermediate circuit 1202 stop transmitting information (step S306).

The reception intermediate circuit 1203 stops the RW information reception process of receiving information from the RFID RW (step S307). Thereafter, the information receiving unit 1205 executes the tag information reception process (step S308).

The information receiving unit 1205 checks whether the tag information reception process is complete (step S309). If the information reception process is not complete (No at step S309), the process returns to step S308, and the information receiving unit 1205 continues the tag information reception process.

If the tag information reception process is complete (Yes at step S309), the reception intermediate circuit 1203 makes the transmission intermediate circuit 1202 cancel the stop of the information transmission process (step S310), and cancels the stop of the RW information reception process (step S311). The process returns to step S302, and the subsequent process is continued.

If the information transmission and reception request is not a tag information reception request at step S305 (No at step S305), the controller 1209 checks whether the request is an RW information reception request for receiving information from the RFID RW (step S312).

If the information transmission and reception request is an RW information reception request (Yes at step S312), the reception intermediate circuit 1203 makes the transmission intermediate circuit 1202 stop the information transmission process (step S313).

The reception intermediate circuit 1203 stops the tag information reception process of receiving information from the RFID tag (step S314). Thereafter, the information receiving unit 1205 executes the RW information reception process (step S315).

The information receiving unit 1205 checks whether the RW information reception process is complete (step S316). If the RW information reception process is not complete (No at step S316), the process returns to step S315, and the information receiving unit 1205 continues the RW information reception process.

If the RW information reception process is complete (Yes at step S316), the reception intermediate circuit 1203 makes the transmission intermediate circuit 1202 cancel the stop of the information transmission process (step S317), and cancels the stop of the tag information reception process (step S318). The process shifts to step S302, and the subsequent process is continued.

If the information transmission and reception request is not an information reception request at step S303 (No at step S303), or if the information transmission and reception request is not an RW information reception request at step S312 (No at step S312), the controller 1209 checks whether this request is a tag information transmission request for transmitting information to the RFID tag as shown in Fig. 15B (step S319).

If the information transmission and reception request is a tag information transmission request (Yes at step S319), the transmission intermediate circuit 1202 makes the reception intermediate circuit 1203 stop the information reception process (step S320).

The transmission intermediate circuit 1202 stops the RW information transmission process of transmitting information to the RFID RW (step S321). Thereafter, the frequency dividing circuit 1206 sets the tag information transmission frequency counter to the frequency of the radio wave for transmitting information (step S322). The information transmitting unit 1204 then executes the tag information transmission process (step S323).

The information transmitting unit 1204 checks whether the tag information transmission process is complete (step S324). If the tag information transmission process is not complete (No at step S324), the process returns to step S323, and the information transmitting unit 1204 continues the tag information transmission process.

If the tag information transmission process is complete (Yes at step S324), the transmission intermediate circuit 1202 makes the reception intermediate circuit 1203 cancel the stop of the information reception process (step S325), and cancels the stop of the RW information transmission process (step S326).

Thereafter, the frequency dividing circuit 1206 adds one to the tag information transmission frequency counter (step S327), and checks whether the tag information transmission frequency counter shows a predetermined maximum value (whether the frequency is 953 megahertz when the frequency band is divided as shown in Fig. 13) (step S328).

If the tag information transmission frequency counter shows a predetermined maximum value (Yes at step S328), the frequency dividing circuit 1206 initializes the tag information transmission frequency counter (e.g., the frequency dividing circuit 1206 initializes the frequency to 950 megahertz when the frequency band is divided as shown in Fig. 13) (step S329). The process returns to step S302, and the subsequent process is continued.

If the tag information transmission frequency counter does not show a predetermined maximum value (No at step S328), the process proceeds to step S302, and the subsequent process is continued.

If the information transmission and reception request is not a tag information transmission request at step S319 (No at step S319), the controller 1209 checks whether this request is an RW information transmission request for transmitting information to the RDID RW (step S330).

If the information transmission and reception request is an RW information transmission request (Yes at step S330), the transmission intermediate circuit 1202 makes the reception intermediate circuit 1203 stop the information reception process (step S331).

The transmission intermediate circuit 1202 stops the tag information transmission process of transmitting information to the RFID tag (step S332). Thereafter, the frequency dividing circuit 1206 sets the RW information transmission frequency counter to the frequency of the radio wave for transmitting information (step S333). The information transmitting unit 1204 then executes the RW information transmission process (step S334).

The information transmitting unit 1204 checks whether the RW information transmission process is complete (step S335). If the RW information transmission process is not complete (No at step S335), the process returns to step S334, and the information transmitting unit 1204 continues the RW information transmission process.

If the RW information transmission process is complete (Yes at step S335), the transmission intermediate circuit 1202 makes the reception intermediate circuit 1203 cancel the stop of the information reception process (step S336), and cancels the stop of the tag information transmission process (step S337).

Thereafter, the frequency dividing circuit 1206 adds one to the tag information transmission frequency counter (step S338), and checks whether the RW information transmission frequency counter shows a predetermined maximum value (whether the frequency is 957 megahertz when the frequency band is divided as shown in Fig. 13) (step S339).

If the RW information transmission frequency counter shows a predetermined maximum value (Yes at step S339), the frequency dividing circuit 1206 initializes the RW information transmission frequency counter (e.g., the frequency dividing circuit 1206 initializes the frequency to 953 megahertz when the frequency band is divided as shown in Fig. 13) (step S340). The process proceeds to step S302, and the subsequent process is continued.

If the RW information transmission frequency counter does not show a predetermined maximum value (No at step S339), the process returns to step S302, and the subsequent process is continued.

When the information transmission and reception request is not an RW information transmission request at step S330 (step S330, No), the process proceeds to step S302, and the subsequent process is continued.

As described above, according to the third embodiment, the frequency dividing circuit 1206 allocates different frequencies as the frequency used to communicate with the RFID tag and the frequency used to communicate with the RFID RW. Therefore, an interference between the radio wave used to communicate with the RFID tag and the radio wave used to communicate with the RFID RW can be prevented.

According to the third embodiment, when the frequency band used to carry out communication is divided into a first frequency band (950 to 952 megahertz in the example shown in Fig. 13) and a second frequency band (953 to 956 megahertz in the example shown in Fig. 13) that is different from the first frequency band, the frequency dividing circuit 1206 allocates a frequency of the radio wave used to communicate with the RFID tag from the first frequency band, and a frequency of the radio wave used to communicate with the RFID RW from the second frequency band. Therefore, an interference between the radio wave used to communicate with the RFID tag and the radio wave used to communicate with the RFID RW can be efficiently prevented.

In the third embodiment, it is explained that the frequency band used to communicate with the RFID tag is different from the frequency band used to communicate with the RFID RW. When communication is carried out with other apparatus, it is also possible to keep the frequency of the radio wave used to respond to the other apparatus different from the frequency of the radio wave used to receive communication from the other apparatus by a predetermined value, thereby preventing an interference of the radio waves.

According to a fourth embodiment, when communication is carried out with other apparatus, the frequency of the radio wave used to respond to the other apparatus is different from the frequency of the radio wave used to receive information from the other apparatus by a predetermined value.

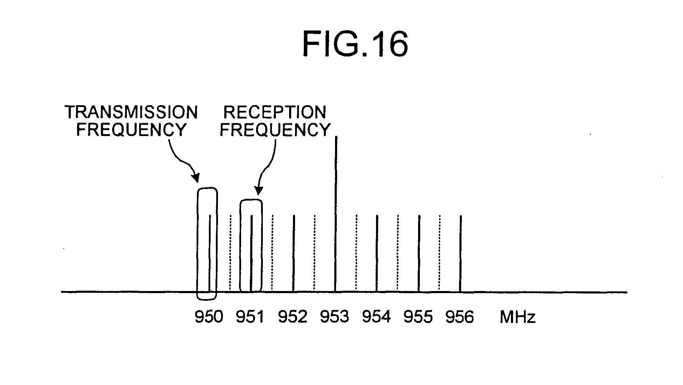

First, a communication process performed by an RFID RW/tag according to the fourth embodiment is explained with reference to Fig. 16.

When the RFID RW/tag receives information from the RFID RW using the radio wave of 950 megahertz, for example, the RFID RW/tag adds 1 megahertz to this frequency and replies to the RFID RW using the radio wave of 951 megahertz as shown in Fig. 16, thereby preventing an interference of the radio waves.

In Fig. 16, the RFID RW/tag replies to the RFID RW using the frequency obtained by adding 1 megahertz to the frequency. Alternatively, when the RFID RW/tag receives information using the radio wave of 955 megahertz from the RFID RW, for example, the RFID RW/tag can subtract 1 megahertz from this frequency and reply to the RFID RW using the radio wave of 954 megahertz.

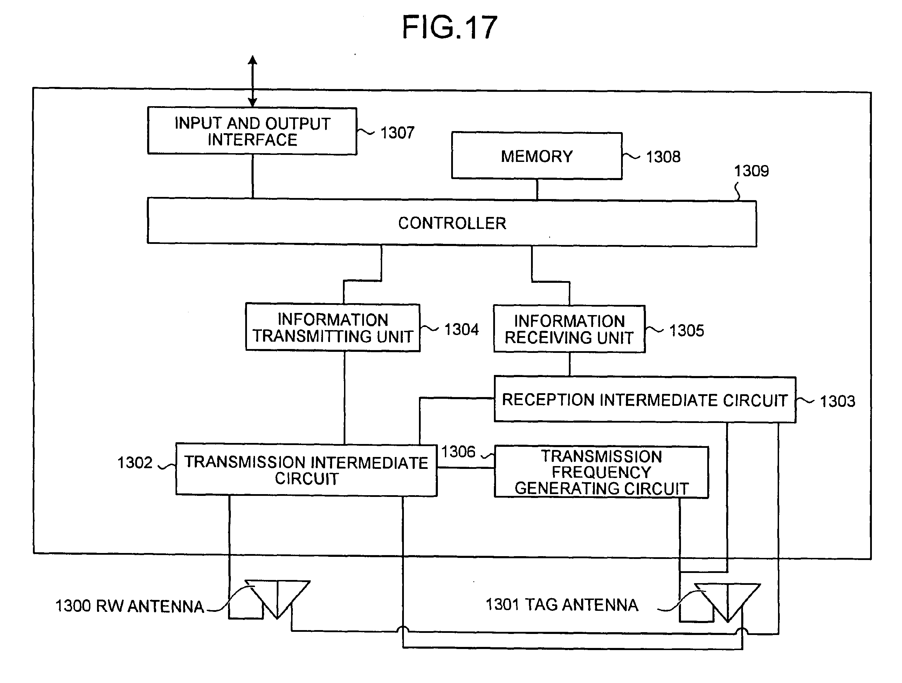

A functional configuration of the RFID RW/tag according to the fourth embodiment is explained next with reference to Fig. 17.

As shown in Fig. 17, this RFID RW/tag has an RW antenna 1300, a tag antenna 1301, a transmission intermediate circuit 1302, a reception intermediate circuit 1303, an information transmitting unit 1304, an information receiving unit 1305, a transmission frequency generating circuit 1306, an input and output interface 1307, a memory 1308, and a controller 1309.

The RW antenna 1300 receives and emits radio waves when the RFID RW/tag functions as an RFID RW to carry out radio communication with the RFID tag. The tag antenna 1301 receives and emits radio waves when the RFID RW/tag functions as an RFID tag to carry out radio communication with the RFID RW.

The transmission intermediate circuit 1302 stops transmitting information to the RFID RW when the RFID RW/tag transmits information to the RFID RW, and makes the reception intermediate circuit 1303 stop receiving information from the RFID tag or the RFID RW.

While transmitting information to the RFID RW, the transmission intermediate circuit 1302 stops transmitting information to the RFID tag, and makes the reception intermediate circuit 1303 stop receiving information from the RFID tag or the RFID RW.

While receiving information from the RFID tag, the reception intermediate circuit 1303 stops receiving information from the RFID RW, and makes the transmission intermediate circuit 1302 stop transmitting information to the RFID tag or the RFID RW.

At the time of receiving information from the RFID RW, the reception intermediate circuit 1303 stops receiving information from the RFID tag, and makes the transmission intermediate circuit 1302 stop transmitting information to the RFID tag or the RFID RW.

The information transmitting unit 1304 transmits information to the RFID tag or the RFID RW. The information receiving unit 1305 receives information from the RFID tag or the RFID RW.

The transmission frequency generating circuit 1306 adds a predetermined value to the frequency of the reception radio wave at the time of receiving information, and sets the obtained frequency as the frequency of the radio wave used to transmit information.

The input and output interface 1307 is a network interface to connect the RFID RW/tag to an external computer. The input and output interface 1307 exchanges information using RS-232C and USB standards. The memory 1308 stores information exchanged with the RFID tag and the RFID RW.

The controller 1309 includes a CPU or the like, and controls the entirety of the RFID RW/tag and exchanges data with each functional unit. Particularly, the controller 1309 receives information transmission and reception requests from the information transmitting unit 1304 and the information receiving unit 1305. The controller 1309 decides whether a received transmission and reception request is a request for transmitting information to the RFID RW, a request for receiving information from the RFID RW, a request for transmitting information to the RFID tag, or a request for receiving information from the RFID tag.

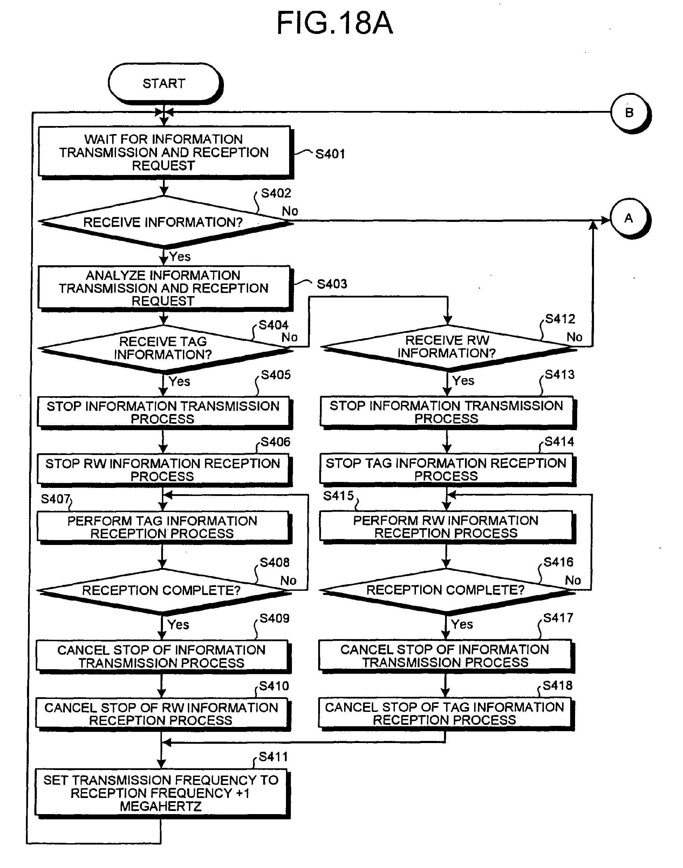

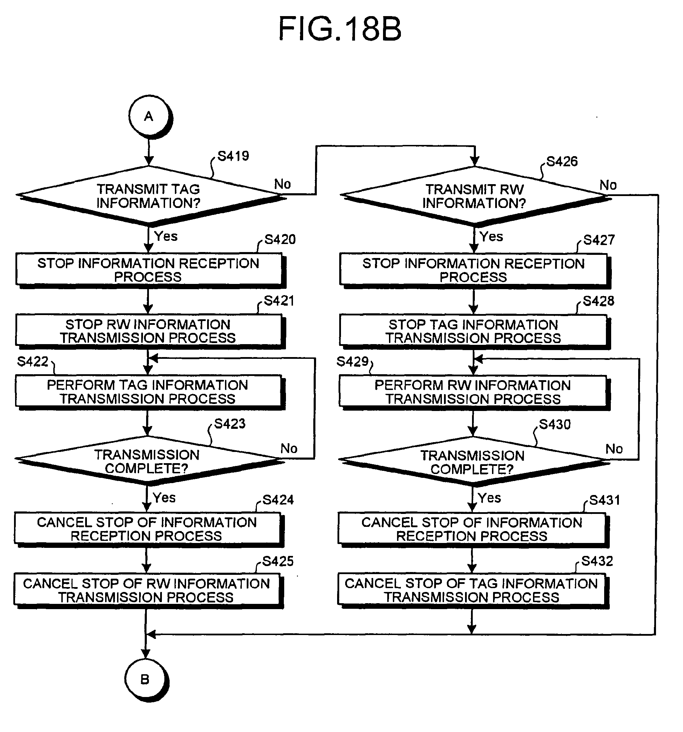

A communication process procedure performed by the RFID RW/tag according to the fourth embodiment is explained next. Figs. 18A and Fig. 18B are flowcharts (1) and (2) of the communication process procedure performed by the RFID RW/tag according to the fourth embodiment, respectively.

As shown in Fig. 18A, the controller 1309 of the RFID RW/tag waits for an information transmission and reception request (step S401). The controller 1309 checks whether the request is an information reception request for receiving information from the RFID tag or the RFID RW (step S402).

If the information transmission and reception request is an information reception request (Yes at step S402), the controller 1309 analyzes the information transmission and reception request (step S403), and checks whether this request is a tag information reception request for receiving information from the RFID tag (step S404).

If the information transmission and reception request is a tag information reception request (Yes at step S404), the reception intermediate circuit 1303 makes the transmission intermediate circuit 1302 stop transmitting information (step S405).

The reception intermediate circuit 1303 stops the RW information reception process of receiving information from the RFID RW (step S406). Thereafter, the information receiving unit 1305 executes a tag information reception process (step S407).

The information receiving unit 1305 checks whether the tag information reception process is complete (step S408). If the tag information reception process is not complete (No at step S408), the process returns to step S407, and the information receiving unit 1305 continues the tag information reception process.

When the tag information reception process is complete (Yes at step S408), the reception intermediate circuit 1303 makes the transmission intermediate circuit 1302 cancel the stop of the information transmission process (step S409), and cancels the stop of the RW information reception process (step S410).

Thereafter, the transmission frequency generating circuit 1306 adds 1 megahertz to the frequency of the reception radio wave, and sets this frequency to the transmission frequency of the response radio wave (step S411). The process returns to step S401, and the subsequent process is continued.

If the information transmission and reception request is not a tag information reception request at step S404 (No at step S404), the controller 1309 checks whether the request is an RW information reception request for receiving information from the RFID RW (step S412).

If the information transmission and reception request is an RW information reception request (Yes at step S412), the reception intermediate circuit 1303 makes the transmission intermediate circuit 1302 stop the information transmission process (step S413).

The reception intermediate circuit 1303 stops the tag information reception process of receiving information from the RFID tag (step S414). Thereafter, the information receiving unit 1305 executes the RW information reception process (step S415).

The information receiving unit 1305 checks whether the RW information reception process is complete (step S416). If the RW information reception process is not complete (No at step S416), the process returns to step S415, and the information receiving unit 1305 continues the RW information reception process.

If the RW information reception process is complete (Yes at step S416), the reception intermediate circuit 1303 makes the transmission intermediate circuit 1302 cancel the stop of the information transmission process (step S417), and cancels the stop of the tag information reception process (step S418).

Thereafter, the transmission frequency generating circuit 1306 adds 1 megahertz to the frequency of the reception radio wave, and sets this frequency to the transmission frequency of the response radio wave (step S411). The process returns to step S401, and the subsequent process is continued.

If the information transmission and reception request is not an information reception request at step S402 (No at step S402) or if the information transmission and reception request is not an RW information reception request at step S412 (No at step S412), the controller 1309 checks whether this request is a tag information transmission request for transmitting information to the RFID tag as shown in Fig. 18B (step S419).

If the information transmission and reception request is a tag information transmission request (Yes at step S419), the transmission intermediate circuit 1302 makes the reception intermediate circuit 1303 stop the information reception process (step S420).

The transmission intermediate circuit 1302 stops the RW information transmission process of transmitting information to the RFID RW (step S421). Thereafter, the information transmitting unit 1304 executes the tag information transmission process (step S422).

The information transmitting unit 1304 checks whether the tag information transmission process is complete (step S423). If the tag information transmission process is not complete (No at step S423), the process returns to step S422, and the information transmitting unit 1304 continues the tag information transmission process.

When the tag information transmission process is complete (Yes at step S423), the transmission intermediate circuit 1302 makes the reception intermediate circuit 1303 cancel the stop of the information reception process (step S424), and cancels the stop of the RW information transmission process (step S425). The process shifts to step S401, and the subsequent process is continued.

If the information transmission and reception request is not a tag information transmission request at step S419 (No at step S419), the controller 1309 checks whether this request is an RW information transmission request for transmitting information to the RDID RW (step S426).

If the information transmission and reception request is an RW information transmission request (Yes at step S426), the transmission intermediate circuit 1302 makes the reception intermediate circuit 1303 stop the information reception process (step S427).

The transmission intermediate circuit 1302 stops the tag information transmission process of transmitting information to the RFID tag (step S428). Thereafter, the information transmitting unit 1304 executes the RW information transmission process (step S429).

The information transmitting unit 1304 checks whether the RW information transmission process is complete (step S430). If the RW information transmission process is not complete (No at step S430), the process returns to step S429, and the information transmitting unit 1304 continues the RW information transmission process.

If the RW information transmission process is complete (Yes at step S430), the transmission intermediate circuit 1302 makes the reception intermediate circuit 1303 cancel the stop of the information reception process (step S431), and cancels the stop of the tag information transmission process (step S432). The process returns to step S401, and the subsequent process is continued.

If the information transmission and reception request is not an RW information transmission request at step S426 (No at step S426), the process returns to step S401, and the subsequent process is continued.

As described above, according to the fourth embodiment, the transmission frequency generating circuit 1306 selects a frequency different from the frequency of the radio wave used in the communication to receive information from the RFID tag or from the RFID RW. The transmission frequency generating circuit 1306 allocates this selected frequency to the frequency of the radio wave to be used to transmit information to the RFID tag or to the RFID RW. Therefore, an interference between the radio wave used to receive information and the radio wave used to transmit information can be prevented.

According to the fourth embodiment, the transmission frequency generating circuit 1306 shifts the frequency of the radio wave used in the communication to receive information from the RFID tag or from the RFID RW, by a predetermined value (e.g., 1 megahertz in the example shown in Fig. 16). Therefore, an interference between the radio wave used to receive information and the radio wave used to transmit information can be prevented.

Although the embodiments of the present invention have been explained above, various modifications other than those explained above can be made without departing from the scope of the technical spirit of the appended claims.

Among the respective processes explained in the embodiments, all or a part of the processes explained as being performed automatically can be performed manually, or all or a part of the processes explained as being performed manually can be performed automatically by a known method.

The information including the process procedure, the control procedure, specific names, and various kinds of data and parameters shown in the specification or in the drawings can be optionally changed, unless otherwise specified.

Furthermore, the respective constituent elements of respective devices shown in the drawings are functionally conceptual, and physically same configuration is not always necessary. In other words, the specific mode of dispersion and integration of the respective devices is not limited to those shown, and all or a part thereof can be functionally or physically dispersed or integrated in an optional unit, according to the various kinds of load and the status of use.

Furthermore, all or an optional part of the process functions performed by the respective devices can be realized by a CPU or a program analyzed and executed by the CPU, or can be realized as hardware by the wired logic.

According to one aspect of the present invention, the communication system can be introduced easily, and that the occurrence of a communication failure can be effectively suppressed.

Furthermore, the PLU process of obtaining product price information can be executed efficiently.

Moreover, the convenience of the customer increases.

According to another aspect of the present invention, the communication apparatus can easily share the information when functioning as the RFID tag and as the RFID RW.

Moreover, that interference of radio waves that occurs when plural communication is simultaneously carried out can be prevented.

Furthermore, it is possible to prevent the occurrence of interference between the radio wave used for the communication with the RFID tag and the radio wave used for the communication with the reader/writer.

Moreover, it is possible to prevent the occurrence of interference between the radio wave used for the radio communication to receive information and the radio wave used for the radio communication to transmit information.

According to still another aspect of the present invention, information stored in plural RFID tags can be easily shared.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A communication system for communicating information about products having product RFID tags attached thereto, comprising:
a first communicating unit installed on equipment that accommodates the products, the first communicating unit being configured to function as a reader/writer that reads first information from the product RFID tags, and to function as a communication RFID tag that transmits the first information; and
a second communicating unit installed on a display shelf on which the products are laid out, the second communicating unit being configured to function as a reader/writer that receives the first information from the first communicating unit, and to function as a communication RFID tag that transmits product information corresponding to received first information, to the first communicating unit.

2. The communication system according to claim 1, wherein
the first information includes product identification information, and equipment identification information allocated to the equipment,
the first communicating unit as the communication RFID tag transmits the product identification information and the equipment identification information, and
when the first communicating unit as the reader/writer receives the product information corresponding to the product identification information and the equipment identification information, the first communicating unit as the communication RFID tag outputs the product information.

3. The communication system according to claim 1, wherein
the product information relates to a total price of the products accommodated in the equipment.

4. A communication apparatus that is installed on equipment that accommodates products attached with RFID tags, the communication apparatus being configured to communicate information about the products, comprising:
an information transmitting unit configured to function as a reader/writer to read first information that is information about the product from the RFID tag, and to function as an RFID tag to transmit the first information; and
an information receiving unit configured to function as a reader/writer to receive product information, corresponding to the first information, transmitted by an information transmitting unit of an apparatus, wherein the apparatus is configured to function as an RFID tag and is attached to a display shelf on which products are laid out.

5. A communication apparatus that is attached to a display shelf on which products attached with RFID tags are laid out, the communication apparatus being configured to communicate information about the products, comprising:
an information receiving unit configured to function as a reader/writer to receive first information that is information about the products, from an apparatus installed on equipment that accommodates the products; and
an information transmitting unit configured to function as an RFID tag to transmit product information corresponding to the first information received by the information receiving unit.

6. A method for communicating information about products attached with RFID tags, comprising:
reading first information from the RFID tags, the act of reading being performed by a first communicating apparatus that is installed on equipment accommodating products, and that functions as a reader/writer;
a first transmitting including transmitting the first information to a second communicating apparatus attached to a display shelf on which the products are laid out, the act of the first transmitting being performed by the first communicating apparatus that functions as an RFID tag;
a first receiving including receiving the first information transmitted at the first transmitting, the act of the first receiving being performed by the second communicating apparatus that functions as a reader/writer;
a second transmitting including transmitting product information corresponding to the first information, the act of the second transmitting being performed by the second communicating apparatus that functions as an RFID tag; and
a second receiving including receiving the product information transmitted at the second transmitting, the act of the second receiving being performed by the first communicating apparatus that functions as a reader/writer.

7. A communication apparatus that executes transmission and reception of information by radio communication, comprising:
an RFID tag communicating unit configured to carry out radio communication with an RFID tag;
a reader/writer communicating unit configured to carry out radio communication with a reader/writer in response to radio communication performed by the reader/writer with the RFID tag; and
a memory configured to store information transmitted and received by radio communication carried out by the RFID tag communicating unit, and information transmitted and received by radio communication carried out by the reader/writer communicating unit.

8. The communication apparatus according to claim 7, further comprising:
a communication arbitrating unit configured to stop execution of communication other than the radio communication carried out by the RFID tag communicating unit and the reader/writer communicating unit.

9. The communication apparatus according to claim 7, further comprising:
a first frequency allocating unit configured to allocate a first frequency for radio communication to be used by the RFID tag communicating unit, and a second frequency for radio communication to be used by the reader/writer communicating unit, wherein the first frequency and the second frequency are different.

10. The communication apparatus according to claim 9, wherein
a frequency band used for communication is divided into a first frequency band and a second frequency band different from the first frequency band,
the first frequency allocating unit allocates the first frequency from the first frequency band, and the second frequency from the second frequency band.

11. The communication apparatus according to claim 7 or 8, further comprising:
a second frequency allocating unit configured to select a transmission frequency different from a reception frequency, and to allocate the transmission frequency to be used any one of when the RFID tag communication unit transmits information and when the reader/writer communication unit transmits information, wherein the reception frequency is used any one of when the RFID tag communicating unit receives information and when the reader/writer communicating unit receives information.

12. The communication apparatus according to claim 11, wherein
the reception frequency differs from the transmission frequency by a predetermined value.

13. A method executed by a communicating apparatus that exchanges information with any one of an RFID tag and a reader/writer that communicates with the RFID tag, comprising:
receiving, performed by a communicating unit in the communicating apparatus, information from any one of the RFID tag and the reader/writer;
storing in a memory included in the communicating apparatus, the information received at the receiving; and
executing any one of transmitting to the reader/writer, the information received from the RFID tag and stored in the memory, and transmitting to the RFID tag, the information received from the reader/writer and stored in the memory.
